(19) Europäisches Patentamt / European Patent Office / Office européen des brevets

(11) **EP 4 712 381 A1**

(12) **EUROPEAN PATENT APPLICATION**
published in accordance with Art. 153(4) EPC

(43) Date of publication:
**18.03.2026   Bulletin 2026/12**

(21) Application number: **24803034.8**

(22) Date of filing: **09.05.2024**

(51) International Patent Classification (IPC):
***H04L 1/1812*** (2023.01)

(52) Cooperative Patent Classification (CPC):
**H04L 1/1812; H04L 5/00**

(86) International application number:
**PCT/CN2024/091812**

(87) International publication number:
**WO 2024/230754 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023   CN 202310532998**

(71) Applicant: **Datang Mobile Communications Equipment Co., Ltd.**
**Beijing 100085 (CN)**

(72) Inventors:
• **WANG, Junwei**
  **Beijing 100085 (CN)**
• **GAO, Xuejuan**
  **Beijing 100085 (CN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(54) **METHOD AND APPARATUS FOR DETERMINING ENHANCED TYPE-3 HARQ CODEBOOK INDEX, AND TERMINAL AND BASE STATION**

(57)     The present disclosure provides methods, apparatuses, terminals and base stations for determining one or more enhanced Type-3 HARQ codebook indices, belonging to the field of communications technology. The method includes: receiving a first DCI sent by a base station, the first DCI being used for scheduling at least one downlink cell in a target cell set; determining at least one reference cell from the target cell set; and determining one or more enhanced Type-3 HARQ codebook indices according to one or more target information indicators of the reference cell in the first DCI.

**FIG. 1**

**Description**

**CROSS-REFERENCE TO RELATED APPLICATION**

This application claims a priority of the Chinese patent application No. 202310532998.9 filed on May 11, 2023 and titled "Methods, Apparatus, Terminals, and Base stations Realizing for Determining One or More Enhanced Type-3 HARQ Codebook Indices", which is incorporated herein by reference in its entirety.

**TECHNICAL FIELD**

The present disclosure relates to the field of communication technology, in particular, to methods, apparatuses, terminals and base stations for determining one or more enhanced Type-3 HARQ codebook indices.

**BACKGROUND**

For DCI format 1_X, Type-3 Hybrid Automatic Repeat ReQuest Acknowledgement (HARQ-ACK) codebook transmission indication (pdsch-HARQ-ACK-OneShotFeedback) is proposed to indicate that User Equipment (UE) needs to feed back Type-3 HARQ codebook, where HARQ refers to Hybrid Automatic Repeat reQuest. When the base stations are configured with an enhanced Type-3 HARQ codebook feedback list (e.g., pdsch-HARQ-ACK-EnhType3ToAddMod-List), the enhanced Type-3 codebook indices may be indicated by the MCS information indicator. However, in a situation where only single-cell scheduling is arranged in one or more indication field(s) of Downlink Control Information (DCI), namely, there is one Modulation and Coding Scheme (MCS) information field for only one cell, it can hardly be directly applied to another application scene of multi-cell scheduling.

**SUMMARY**

The present disclosure aims at providing methods, apparatuses, terminals and base stations for determining one or more enhanced Type-3 HARQ codebook indices, and aims at solving a problem of how the terminal determines the enhanced Type-3 codebook indices in the multi-cell scheduling scene in the related art.
In a first aspect, embodiments of the present disclosure provide a method for determining one or more enhanced Type-3 HARQ codebook indices, which is performed by a terminal, the method including:

receiving a first DCI sent by a base station, the first DCI being used for scheduling at least one downlink cell in a target cell set;
determining at least one reference cell from the target cell set; and
determining one or more enhanced Type-3 HARQ codebook indices according to one or more target information indicators of the reference cell in the first DCI.

According to some embodiments of the present disclosure, the determining at least one reference cell from the target cell set includes: determining at least one reference cell from the target cell set, in a case that the first DCI supports triggering Type-3 HARQ codebook transmission and an enhanced Type-3 codebook indicator is not included in the first DCI.
According to some embodiments of the present disclosure, the determining at least one reference cell from the target cell set includes: determining one or more scheduled cells from the target cell set according to one or more co-scheduled indicators in the first DCI; determining at least one predetermined cell in the one or more scheduled cells as the reference cell; or, determining at least one predetermined cell in the target cell set as the reference cell.
According to some embodiments of the present disclosure, the predetermined cell is one of: a cell with a predetermined cell index value; or, a cell corresponding to the one or more target information indicators of a preset position in the first DCI; or, a cell having no Physical Downlink Shared Channel (PDSCH) transmission and with a predetermined cell index value; or, a cell having no PDSCH transmission and corresponding to the one or more target information indicators of the preset position in the first DCI.
According to some embodiments of the present disclosure, the cell with the predetermined cell index value includes: a cell with the largest cell index value; or, a cell with the smallest cell index value.
According to some embodiments of the present disclosure, the cell corresponding to the one or more target information indicators of the preset position in the first DCI includes: a cell corresponding to a first target information indicator in the first DCI; or, a cell corresponding to a last target information indicator in the first DCI.
According to some embodiments of the present disclosure, the one or more target information indicators include one or more FDRA indicators and one or more MCS indicators. And the determining one or more enhanced Type-3 HARQ codebook indices according to one or more target information indicators of the reference cell in the first DCI includes: determining whether the reference cell has PDSCH transmission according to the one or more FDRA indicators of the reference cell; determining the one or more enhanced Type-3 HARQ codebook indices according to the one or more MCS indicators of the reference cell in the case of determining that the reference cell has no PDSCH transmission; determining the one or more enhanced Type-3 HARQ codebook indices as default values, in the case of determining that the reference cell has PDSCH transmission.

According to some embodiments of the present disclosure, the method further includes: receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator; determining, based on the configuration information, whether the first DCI supports triggering Type-3 HARQ codebook transmission, and whether the first DCI includes an enhanced Type-3 codebook indicator.

According to some embodiments of the present disclosure, the receiving the configuration information sent by the base station includes: receiving the configuration information carried by the base station through one or more one-shot feedback indication fields, wherein the configuration information is used for indicating whether the first DCI includes Type-3 HARQ response codebook transmission indicator(s); receiving the configuration information carried by the base station through one or more enhanced Type-3 indication fields, wherein the configuration information is used for indicating whether the first DCI includes enhanced Type-3 codebook indices indicator(s).

According to some embodiments of the present disclosure, a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

According to some embodiments of the present disclosure, the one or more target information indicators of the reference cell includes one or more MCS indicators. And the determining one or more enhanced Type-3 HARQ codebook indices according to one or more target information indicators of the reference cell in the first DCI includes: determining one or more enhanced Type-3 HARQ codebook indices according to the one or more MCS indicators of a plurality of reference cells, wherein each of the plurality of reference cells corresponds to one of the one or more MCS indicators.

In a second aspect, embodiments of the present disclosure provide another method for determining one or more enhanced Type-3 HARQ codebook indices, which is performed by a base station, the method including: sending a first Downlink Control Information (DCI) to a terminal, the first DCI being used for scheduling at least one downlink cell in a target cell set; wherein one or more target information indicators of the reference cell in the first DCI is used to indicate one or more enhanced Type-3 HARQ codebook indices, and the reference cell is at least one cell in the target cell set.

According to some embodiments of the present disclosure, the reference cell is: at least one predetermined cell in one or more scheduled cells, wherein the one or more scheduled cells are indicated through one or more co-scheduled indicators in the first DCI; or, at least one predetermined cell in the target cell set.

According to some embodiments of the present disclosure, the predetermined cell is one of: a cell with a predetermined cell index value; or, a cell corresponding to the one or more target information indicators of a preset position in the first DCI; or, a cell having no PDSCH transmission and with a predetermined cell index value; or, a cell having no PDSCH transmission and corresponding to the one or more target information indicators of the preset position in the first DCI.

According to some embodiments of the present disclosure, the cell with the predetermined cell index value includes: a cell with the largest cell index value; or, a cell with the smallest cell index value.

According to some embodiments of the present disclosure, the cell corresponding to the one or more target information indicators of the preset position in the first DCI includes: a cell corresponding to a first target information indicator in the first DCI; or, a cell corresponding to a last target information indicator in the first DCI.

According to some embodiments of the present disclosure, in the case where the first DCI does not include the one or more co-scheduled indicators, the method further includes one of: indicating the cells in the target cell set as having no PDSCH transmission, and wherein the one or more target information indicators of the cells are used for indicating one or more same enhanced Type-3 HARQ codebook indices; or, indicating the cells in the target cell set as having PDSCH transmission.

According to some embodiments of the present disclosure, in the case where the first DCI does include the one or more co-scheduled indicators, the method further includes one of: indicating a number of the one or more scheduled cells being limited to 1 through the one or more co-scheduled indicators; indicating all of the one or more scheduled cells as having no PDSCH transmission, and wherein the one or more target information indicators of the cells are all used for indicating one or more same enhanced Type-3 HARQ codebook indices; or, indicating all of the one or more scheduled cells as having PDSCH transmission.

According to some embodiments of the present disclosure, the one or more target information indicators include one or more FDRA indicators and one or more MCS indicators.

According to some embodiments of the present disclosure, the method further includes: sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

According to some embodiments of the present disclosure, the sending configuration information to the terminal includes: sending configuration information to the terminal through one or more one-shot feedback indication fields, wherein the configuration information is used for indicating whether the first DCI includes Type-3 HARQ response codebook transmission indicator(s); sending configuration information to the terminal through one or more enhanced Type-3 indication fields, wherein the configuration information is used for indicating whether the first DCI includes enhanced Type-3 codebook indices indicator(s).

According to some embodiments of the present disclosure, a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

In a third aspect, embodiments of the present disclosure provide a terminal including a transceiver, a memory, a processor and a computer program stored in the memory and operable on the processor, wherein the processor is configured to read the computer program stored in the memory and perform the following processes: receiving a first DCI sent by a base station, the first DCI being used for scheduling at least one downlink cell in a target cell set; determining at least one reference cell from the target cell set; and determining one or more enhanced Type-3 HARQ codebook indices according to one or more target information indicators of the reference cell in the first DCI.

According to some embodiments of the present disclosure, the processor is further configured to read the computer program stored in the memory, perform the following processes: determining at least one reference cell from the target cell set, in a case that the first DCI supports triggering Type-3 HARQ codebook transmission and an enhanced Type-3 codebook indicator is not included in the first DCI.

According to some embodiments of the present disclosure, the processor is further configured to read the computer program stored in the memory, perform the following processes: determining one or more scheduled cells from the target cell set according to one or more co-scheduled indicators in the first DCI; determining at least one predetermined cell in the one or more scheduled cells as the reference cell; or, determining at least one predetermined cell in the target cell set as the reference cell.

According to some embodiments of the present disclosure, the predetermined cell is one of: a cell with a predetermined cell index value; or, a cell corresponding to the one or more target information indicators of a preset position in the first DCI; or, a cell having no PDSCH transmission and with a predetermined cell index value; or, a cell having no PDSCH transmission and corresponding to the one or more target information indicators of the preset position in the first DCI.

According to some embodiments of the present disclosure, the cell with the predetermined cell index value includes: a cell with the largest cell index value; or, a cell with the smallest cell index value.

According to some embodiments of the present disclosure, the cell corresponding to the one or more target information indicators of the preset position in the first DCI includes: a cell corresponding to a first target information indicator in the first DCI; or, a cell corresponding to a last target information indicator in the first DCI.

According to some embodiments of the present disclosure, the one or more target information indicators include one or more FDRA indicators and one or more MCS indicators. And the processor is further configured to read the computer program stored in the memory, perform the following processes: determining whether the reference cell has PDSCH transmission according to the one or more FDRA indicators of the reference cell; determining the one or more enhanced Type-3 HARQ codebook indices according to the one or more MCS indicators of the reference cell in the case of determining that the reference cell has no PDSCH transmission; determining the one or more enhanced Type-3 HARQ codebook indices as default values, in the case of determining that the reference cell has PDSCH transmission.

According to some embodiments of the present disclosure, the processor is further configured to read the computer program stored in the memory, perform the following processes: receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator; determining, based on the configuration information, whether the first DCI supports triggering Type-3 HARQ codebook transmission, and whether the first DCI includes an enhanced Type-3 codebook indicator.

According to some embodiments of the present disclosure, the processor is further configured to read the computer program stored in the memory, perform the following processes: receiving the configuration information carried by the base station through one or more one-shot feedback indication fields, wherein the configuration information is used for indicating whether the first DCI includes Type-3 HARQ response codebook transmission indicator(s); receiving the configuration information carried by the base station through one or more enhanced Type-3 indication fields, wherein the configuration information is used for indicating whether the first DCI includes enhanced Type-3 codebook indices indicator(s).

According to some embodiments of the present disclosure, a number of bits occupied by the enhanced Type-3 codebook indices indicator(s) is $\lceil \log_2(n_{CB}) \rceil$ , where, $n_{CB}$ is a number of enhanced Type-3 codebook indices configured for the base station.

According to some embodiments of the present disclosure, the one or more target information indicators of the reference cell includes one or more MCS indicators. And the processor is further configured to read the computer program stored in the memory, perform the following processes: determining one or more enhanced Type-3 HARQ codebook indices according to the one or more MCS indicators of a plurality of reference cells, wherein each of the plurality of reference cells corresponds to one of the one or more MCS indicators.

In a fourth aspect, embodiments of the present disclosure provide a base station including a transceiver, a memory, a processor and a computer program stored in the memory and operable on the processor, wherein the processor is configured to read the computer program stored in the memory and perform the following processes: sending a first Downlink Control Information (DCI) to a terminal, the first DCI being used for scheduling at least one downlink cell in a target cell set; wherein one or more target information indicators of the reference cell in the first DCI is used to indicate one or more enhanced Type-3 HARQ codebook indices, and the reference cell is at least one cell in the target cell set.

According to some embodiments of the present disclosure, the reference cell is: at least one predetermined cell in one or more scheduled cells, wherein the one or more scheduled cells are indicated through one or more co-scheduled indicators in the first DCI; or, at least one predetermined cell in the target cell set.

According to some embodiments of the present disclosure, the predetermined cell is one of: a cell with a predetermined cell index value; or, a cell corresponding to the one or more target information indicators of a preset position in the first DCI; or, a cell having no PDSCH transmission and with a predetermined cell index value; or, a cell having no PDSCH transmission and corresponding to the one or more target information indicators of the preset position in the first DCI.

According to some embodiments of the present disclosure, the cell with the predetermined cell index value includes: a cell with the largest cell index value; or, a cell with the smallest cell index value.

According to some embodiments of the present disclosure, the cell corresponding to the one or more target information indicators of the preset position in the first DCI includes: a cell corresponding to a first target information indicator in the first DCI; or, a cell corresponding to a last target information indicator in the first DCI.

According to some embodiments of the present disclosure, in the case where the first DCI does not include the one or more co-scheduled indicators, the method further comprises one of: indicating the cells in the target cell set as having no PDSCH transmission, and wherein the one or more target information indicators of the cells are used for indicating one or more same enhanced Type-3 HARQ codebook indices; or, indicating the cells in the target cell set as having PDSCH transmission.

According to some embodiments of the present disclosure, in the case where the first DCI does include the one or more co-scheduled indicators, the method further comprises one of: indicating a number of the one or more scheduled cells being limited to 1 through the one or more co-scheduled indicators; indicating all of the one or more scheduled cells as having no PDSCH transmission, and wherein the one or more target information indicators of the cells are all used for indicating one or more same enhanced Type-3 HARQ codebook indices; or, indicating all of the one or more scheduled cells as having PDSCH transmission.

According to some embodiments of the present disclosure, the one or more target information indicators include one or more FDRA indicators and one or more MCS indicators.

According to some embodiments of the present disclosure, the processor is further configured to read the computer programs stored in the memory, perform the following processes: sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

According to some embodiments of the present disclosure, the processor is further configured to read the computer program stored in the memory, perform the following processes: sending configuration information to the terminal through one or more one-shot feedback indication fields, wherein the configuration information is used for indicating whether the first DCI includes Type-3 HARQ response codebook transmission indicator(s); sending configuration information to the terminal through one or more enhanced Type-3 indication fields, wherein the configuration information is used for indicating whether the first DCI includes enhanced Type-3 codebook indices indicator(s).

According to some embodiments of the present disclosure, a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

In a fifth aspect, embodiments of the present disclosure provide an apparatus for determining one or more enhanced Type-3 HARQ codebook indices, which is arranged in a terminal, the apparatus including: a first receiving module for receiving a first Downlink Control Information (DCI) sent by a base station, the first DCI being used for scheduling at least one downlink cell in a target cell set; a first determining module for determining at least one reference cell from the target cell set; and a second determining module for determining one or more enhanced Type-3 HARQ codebook indices according to one or more target information indicators of the reference cell in the first DCI.

In a sixth aspect, embodiments of the present disclosure provide an apparatus for determining one or more enhanced Type-3 HARQ codebook indices, which is arranged in a base station, the apparatus including: a first sending module for sending a first DCI to a terminal, the first DCI being used for scheduling at least one downlink cell in a target cell set; wherein one or more target information indicators of the reference cell in the first DCI is used to indicate one or more enhanced Type-3 HARQ codebook indices, and the reference cell is at least one cell in the target cell set.

In a seventh aspect, embodiments of the present disclosure provide a processor-readable storage medium storing therein a computer program, wherein the computer program is configured to cause a processor to execute the methods for determining one or more enhanced Type-3 HARQ codebook indices according to the first aspect, or the computer program is configured to cause the processor to execute the methods for determining one or more enhanced Type-3 HARQ codebook indices according to the second aspect.

In the above embodiments, a terminal receives the first DCI that is sent by a base station, the first DCI is used for scheduling at least one downlink cell in a target cell set, at least one reference cell is determined from the target cell set, and the enhanced Type-3 HARQ codebook index(indices) is(are) determined according to the one or more target information indicators of the reference cell in the first DCI. In this manner, the enhanced Type-3 HARQ codebook can be transmitted by using multi-cell scheduling signaling.

## BRIEF DESCRIPTION OF THE DRAWINGS

FIG. 1 is one of flow charts of a method for determining one or more enhanced Type-3 HARQ codebook indices in accordance with a certain embodiment of the present disclosure;

FIG. 2 is another flow chart of a method for determining one or more enhanced Type-3 HARQ codebook indices in accordance with a certain embodiment of the present disclosure;

FIG. 3 is one of the architectural block diagrams of an apparatus for determining one or more enhanced Type-3 HARQ codebook indices in accordance with a certain embodiment of the present disclosure;

FIG. 4 is another architectural block diagram of an apparatus for determining one or more enhanced Type-3 HARQ codebook indices in accordance with a certain embodiment of the present disclosure;

FIG. 5 is a schematic diagram of a hardware structure of a terminal in accordance with a certain embodiment of the present disclosure; and

FIG. 6 is another schematic diagram of a hardware architecture of a base station in accordance with a certain embodiment of the present disclosure.

## DETAILED DESCRIPTION

The technical solutions of the disclosed embodiments are described clearly and completely below in connection with the accompanying drawings of the disclosed embodiments, and it is obvious that the described embodiments are only a part of the disclosed embodiments, and not all of the disclosed embodiments. All other embodiments based on the embodiments in this disclosure, which are available to those of ordinary skill in the art without creative effort, are within the scope of this disclosure.

The term 'and/or' in the disclosed embodiments describes an association relationship of the associated objects, indicating that there can be three relationships, for example, A and/or B, which can represent the three cases of A alone, A and B together, and B alone. The character "/" typically indicates that the context object is in an "or" relationship.

The term "plurality" in the disclosed embodiments refers to two or more, and other quantifiers are similar.

Embodiments of the disclosure relate to terminal devices, which may be devices that provide voice and/or data connectivity to a user, hand-held devices with wireless connection capability, or other processing devices connected to a wireless modem, etc. The name of the terminal device may be different in different systems, for example, in the fifth generation (5G) mobile communication system, the terminal device may be called User Equipment (UE). The wireless terminal device can communicate with one or more Core Networks (CN) via a Radio Access Network (RAN), the wireless terminal device can be a mobile terminal device, such as a mobile telephone (or a so-called 'cellular' telephone) and a computer having the mobile terminal device, for example, a portable, pocket-sized, hand-held, computer-built or vehicle-mounted mobile device, which exchanges speech and/or data with the radio access network. For example, Personal Communication Service (PCS) phones, cordless phones, Session Initiated Protocol (SIP) phones, Wireless Local Loop (WLL) stations, Personal Digital Assistants (PDA) and other devices. A wireless terminal device may also be referred to as a system, subscriber unit, subscriber station, mobile station, mobile, remote station, access point, remote terminal, access terminal, user terminal, user agent, user device, and is not limited to the disclosed embodiments.

Embodiments of the disclosure relate to network devices, which may be base stations, which may include a plurality of cells serving terminals. Depending on the application, a base station may also be referred to as an access point, or it may be a device in an access network that communicates with a wireless terminal device over an air interface through one or more sectors, or by other names. The network device may be used to exchange received air frames with Internet Protocol (IP) packets and act as a router between the wireless terminal device and the rest of the access network, which may include an IP communications network. The network devices may also coordinate attribute management for the air interface. For example, the network device related to the disclosed embodiment can be Global System for Mobile communications (GSM) or Code Division Multiple Access (CDMA) network equipment (Base Transceiver Station, BTS), also can be Wide-band Code Division Multiple Access (WCDMA) network equipment (NodeB), also can be evolutionary NodeB (eNB or e-NodeB) in Long Term Evolution (LTE) system, 5G base station (gNB) in 5G network architecture (next generation system), also can be Home evolved NodeB (HeNB), relay node, home base station (fto), pico base station (pico), etc., and the disclosed embodiments are not limited thereto. In some network architectures, network devices may include Centralized Unit (CU) nodes and Distributed Unit (DU) nodes, and the centralized units and distributed units may also be geographically separated.

Between the network device and the terminal device, one or more antennas are used to carry out MIMO transmission, and the MIMO transmission may be single user MIMO (SU-MIMO) or multiple user MIMO (MU-MIMO). According to the form and number of the combination of the root antennas, the MIMO transmission can be two dimensional MIMO (2D-MIMO), three dimensional MIMO (3 D-MIMO), full dimension MIMO (FD-MIMO) or ultra-large-scale MIMO (massive MIMO), and also can be diversity transmission or pre-coding transmission or beamforming transmission.

The following descriptions relate to some basic knowledge regarding different schemes provided by the disclosed embodiments.

**Type-3 codebook transmission**

In the NR R16 version, Type-3 HARQ-ACK codebook transmission is supported. In the downlink cell PDSCH scheduling signaling DCI, if the Type-3 HARQ-ACK codebook transmission indicator (pdsch-HARQ-ACK-OneShotFeedback) is 1, the UE is instructed to perform Type-3 HARQ ACK codebook transmission. The Type-3 codebook is also called as one shot codebook transmission, which transmits all the positive acknowledgement (ACK)/negative acknowledgement (NACK)s of all the HARQ processes and the cells belonging to an uplink control channel group once.


**Enhanced Type-3 Codebook Transmission**

In order to improve Type-3 code book transmission efficiency, a terminal allows for only transmitting ACK/NACKs of part of cells or ACK/NACKs of part of HARQ processes. Accordingly, the terminal determines which carrier/process used for transmission according to enhanced Type-3 code book indices configured by a base station (different code book index may correspond to different cell/HARQ process to be transmitted).

If the base station is configured with an enhanced Type-3 codebook list (i.e., configured with a plurality of enhanced Type-3 codebooks), then indices of the enhanced Type-3 codebook transmitted by the UE (i.e., which Type-3 codebook in the transmission configuration) needs to be further determined, and a specific scheme is as follows.

If 'enhanced Type-3 HARQ-ACK codebook indicator' is included in DCI, then determining Type-3 codebook(s) that need(s) to be transmitted according to the enhanced Type-3 codebook indicator.

If the 'enhanced Type-3 HARQ-ACK codebook indicator' is not included in the DCI, then if the DCI has PDSCH scheduling, the enhanced Type-3 codebook index is considered to be 0; if the DCI has no PDSCH scheduling, the Type-3 codebook index is determined by using an MCS indicator.

The method judges whether there is PDSCH scheduling or not by using special value(s) of Frequency Domain Resource Assignment (FDRA), and judges that there is no PDSCH scheduling or no PDSCH transmission under the following conditions:

if the resources allocation (resourceAllocation) is resources allocation type 0 (resourceAllocationType0), and the FDRA indicators are all 0;
if the resources allocation (resourceAllocation) is resources allocation type 1 (resourceAllocationType1), and the FDRA indicators are all 1;
if the resources allocation (resourceAllocation) is Dynamic Switch (dynamicSwitch) and the FDRA indicators are both 1 or both 0.

### III. Multi-Cell PDSCH Scheduling

The multi-cell PDSCH scheduling refers to that the base station adopts DCI format 1_X (which is called as DCI1_X for short), and the DCI can schedule the PDSCHs of multiple cells. The related technical scheme is as follows:

### 1. Base station defines multi-cell set

A cell set contains a plurality of cells, and DCI format 1_X can schedule one or more cells in the cell set at a time. For example, cell set -1 has four cells (cell-1, cell-2, cell-3, cell-4), and DCI format 1_X can schedule one or more cells in the four cells. Specifically, which cell(s) is(are) scheduled is indicated by certain indicator(s) in the DCI, which can be indicated by the following implicit or explicit methods.

Implicit indication: using special value(s) of FDRA to indicate (same as method for judging whether there is PDSCH transmission described in the Background section), i.e., if FDRA indicator(s) of corresponding co-scheduled cell(s) is(are) special value (for example, FDRA indicators are all 0), then the cell is not considered to be scheduled.

Explicit indication: in DCI1_X, one or more co-scheduled indicators are included, which is used to determine which cell(s) is(are) scheduled.

When a base station is configured with a plurality of cell sets, a cell set scheduling is added to DCI1_X to indicate which cell set is scheduled.

### 2. In DCI format 1_X, each cell has an independent MCS indicator

In DCI format 1_X, each scheduled cell has its own independent MCS indicator. For example, cell set-1, configured with four cells (cell-1, cell-2, cell-3, cell-4), and the base station can schedule up to four cells. Then, in the DCI format 1_X, there are four MCS indicators, each indicator corresponding to one cell (MCS-index1, corresponding to cell-1; MCS-index2, corresponding to cell-2; MCS-index3, corresponding to cell-3; MCS-index4, corresponding to cell-4).

It should be noted that in the actual scheduling, for one scheduled cell, it is possible to schedule two transport blocks at one time, each transport block corresponding to one MCS indicator, such that there may be a case where one cell corresponds to two MCS indicator. In this case, one of the two MCS indicators (such as the first MCS indicator) can be used as the MCS indicator of this cell, and applied to this technical scheme.

Under the multi-cell scheduling scenario, problems to be solved to support enhanced Type-3 HARQ-ACK codebook transmission are as below.

In DCI format 1_X, 'Type-3 HARQ-ACK codebook transmission indicator (pdsch-HARQ-ACK-OneShotFeedback)' is proposed for indicating that the UE needs to feed back the Type-3 HARQ codebook. When the base stations are configured with an enhanced Type-3 HARQ codebook feedback list (e.g., pdsch-HARQ-ACK-EnhType3ToAddModList), the enhanced Type-3 codebook index number may be indicated by the MCS information indicator(s). For DCI format 1_X, when the scheduling information indicator contains therein information indicators of multiple cells (e.g., FDRA indicators of multiple cells, MCS indicators of multiple cells), how to indicate the indices of the enhanced Type-3 codebook that the terminal needs to transmit is a technical problem.

Based on the above, the disclosed embodiments provide methods, apparatuses, terminals and base stations for determining one or more enhanced Type-3 HARQ codebook indices, for solving the problem of how to indicate the enhanced Type-3 codebook indices to the terminal in the scenario of multi-cell scheduling.

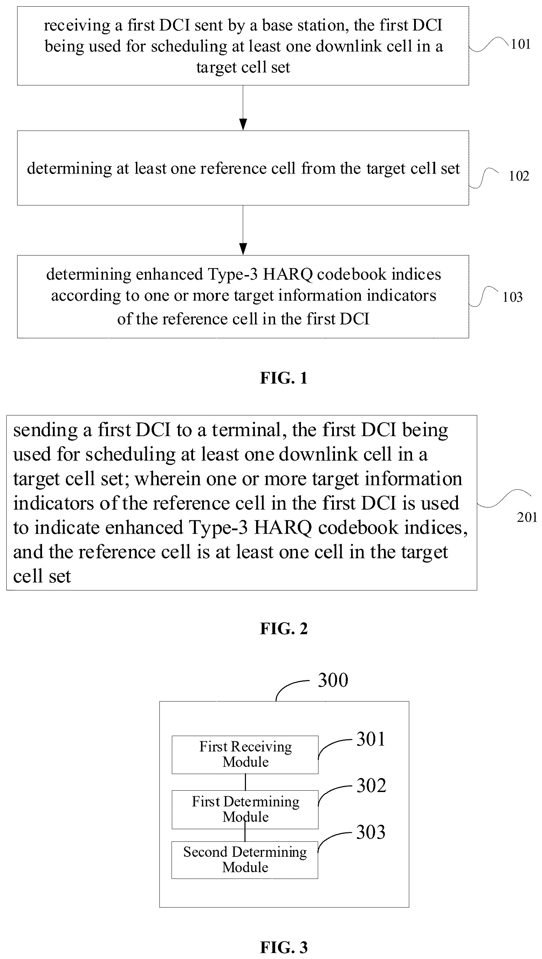

Referring to FIG. 1, the disclosed embodiment provides a method for determining one or more enhanced Type-3 HARQ codebook indices, which is applied to a terminal. The method includes the following steps.

Step 101 of receiving a first DCI sent by a base station, the first DCI being used for scheduling at least one downlink cell in a target cell set.

In some embodiments, the first DCI is a DCI format 1_X (DCI1_X for short).

In this step, the target cell set includes a plurality of cells, and the first DCI may schedule one or more cells in the target cell set at a time. If the target cell set is configured with four cells (cell-1, cell-2, cell-3, cell-4), the first DCI can schedule one or more of the four cells. Specifically schedule which cells are indicated by the first DCI, and the indication mode includes the following two kinds.

Implicit mode, i.e., using special value(s) of one or more FDRA indicators to indicate, i.e., if indication of one or more FDRA indicators of corresponding co-scheduled cell is special value (for example, FDRA indicators are all 0), then the cell is not considered to be scheduled.

Explicit mode, the DCI1_X includes a Co-scheduled Indicator (CSI), and the scheduled cell is indicated to the terminal by the CSI indicated by the scheduled cell.

Step 102 of determining at least one reference cell from the target cell set.

Step 103 of determining one or more enhanced Type-3 HARQ codebook indices according to one or more target information indicators of the reference cell in the first DCI.

In some embodiments, the target information indicators include FDRA indicator(s) and MCS indicator(s).

It should be noted that if there are multiple FDRA indicators in the first DCI, each FDRA indicator corresponds to a cell. If there are multiple MCS indicators in the first DCI, each MCS indicator corresponds to a cell.

For example, if it is determined that a reference cell has PDSCH transmission according to the FDRA indicator of the reference cell, the index of the enhanced Type-3 HARQ codebook is determined to be 0 or other default value. If it is determined that the reference cell has no PDSCH transmission according to the FDRA indicator of the reference cell, the index value of the enhanced Type-3 HARQ codebook is indicated by the MCS indicator of the reference cell or the index value of the enhanced Type-3 HARQ codebook takes a default value.

It should be noted that for multi-carrier scheduling, currently an implicit method is used to indicate whether a cell has PDSCH transmission (e.g., via an FDRA indicator), if the corresponding cell does not have PDSCH scheduling, the corresponding cell may not have a corresponding MCS indicator. In this case, in order to ensure that the codebook index value is calculated correctly, it can be stipulated that when the base station configures an enhanced Type-3 HARQ codebook (or the number of the configured codebook is greater than 1), the base station transmits MCS indicators of all cells in all the configuration sets, regardless of whether the cells have scheduled PDSCH transmission.

In the above embodiment, the terminal receives the first DCI sent by the base station, the first DCI is used for scheduling at least one downlink cell in the target cell set, at least one reference cell is determined from the target cell set, and the one or more enhanced Type-3 HARQ codebook indices are determined according to the target information indicator of the reference cell in the first DCI. In this manner, the enhanced Type-3 HARQ codebook can be transmitted by using multi-cell scheduling signaling.

In one embodiment, in the above step 102, the determining at least one reference cell from the target cell set includes:

determining at least one reference cell from the target cell set, in a case that the first DCI supports triggering Type-3 HARQ codebook transmission and an enhanced Type-3 codebook indicator is not included in the first DCI.

It should be noted that in the case of determining that the first DCI does not support triggering Type-3 HARQ codebook transmission, it is not necessary to determine one or more enhanced Type-3 HARQ codebook indices. And in the case of the first DCI including enhanced Type-3 codebook indices indicator, the enhanced Type-3 codebook indices are determined directly according to the enhanced Type-3 codebook indices indicator.

In one embodiment, the determining at least one reference cell from the target cell set in step 102 includes the following two alternatives.

**Alternative 1,** determining one or more scheduled cells from the target cell set according to one or more co-scheduled indicators in the first DCI, determining at least one predetermined cell in the one or more scheduled cells as the reference cell.

In some embodiments, the predetermined cell is one of the following modes.

Mode 1, a cell with a predetermined cell index value.

In some embodiments, the cell with the predetermined cell index value includes a cell with the largest cell index value; or, a cell with the smallest cell index value. That is, in Alternative 1, the cell having the maximum or minimum cell index value among the scheduled cells may be determined as the reference cell, and the enhanced Type-3 codebook indices are indicated by using the target information indicator(s) of the reference cell.

Mode 2, a cell corresponding to the one or more target information indicators of a preset position in the first DCI.

In some embodiments, the cell corresponding to the one or more target information indicators of a preset position in the first DCI includes a cell corresponding to a first target information indicator in the first DCI; or, a cell corresponding to a last target information indicator in the first DCI.

It should be noted that when there are a total of N scheduled cells, the FDRA indicators and MCS indicators of the N scheduled cells are arranged in an ascending order of the index values of the scheduled cells.

For example, indicator information in DCI1-X is shown in Table 1 below:

**Table 1**

| Indicator Information | Meanings | Notes |
|---|---|---|
| Co-Scheduled Cell Indicator | Indicating which cells are scheduled in a set of cells | Indication of one or more scheduled cells (assuming that N cells are indicated as scheduled) |

(continued)

| Indicator Information | Meanings | Notes |
|---|---|---|
| FDRA Indicator 1 | Cell with the smallest cell index (among the scheduled cells) | There are N pieces of FDRA indicators of scheduled cells, and the FDRA indicators in the scheduled cells are arranged according to an ascending order of the indices of the scheduled cells |
| FDRA Indicator 2 | Cell with the next smallest Cell index (among the scheduled cells) | |
| ... | ... | |
| FDRA Indicator N | Cell with the largest Cell index (among the scheduled cells) | |
| MCS Indicator 1 | Cell with the smallest Cell index (among the scheduled cells) | There are N pieces of MCS information blocks of scheduled cells, and the MCS information blocks of the scheduled cells are arranged according to an ascending order of the indices of the scheduled cells. |
| MCS Indicator 2 | Cell with the next smallest Cell index (among the scheduled cells) | |
| ... | ... | |
| MCS Indicator N | Cell with the largest Cell index (among the scheduled cells) | |

The arrangement order relationship of the scheduled cell information indicators shown in the Table 1 above illustrates that the cell with the smallest cell index value in the scheduled cells is used as the reference cell, which can be equivalent to the cell corresponding to the first FDRA/MCS indicator in the first DCI (i.e., FDRA indicator 1/MCS indicator 1 in the Table 1) as the reference cell. Alternatively, the cell with the largest cell index value in the scheduled cells is used as the reference cell, which can be equivalent to the cell corresponding to the last FDRA/MCS indicator (i.e. FDRA indicator N/MCS indicator N in the Table 1) as the reference cell.

Mode 3, a cell having no PDSCH transmission and with a predetermined cell index value.

In some embodiments, the cell with the predetermined cell index value includes a cell with the largest cell index value; or, a cell with the smallest cell index value.

In the mode 3, cells without PDSCH transmission are determined from the scheduled cells, and then a cell with a predetermined cell index value is further selected out of the cells without PDSCH transmission. For example, the cell with the maximum or minimum cell index value is selected out of the cells without PDSCH transmission, as the reference cell.

Mode 4: a cell having no PDSCH transmission and corresponding to the one or more target information indicators of the preset position in the first DCI.

In some embodiments, the cell corresponding to the one or more target information indicators of the preset position in the first DCI includes a cell corresponding to a first target information indicator in the first DCI or a cell corresponding to a last target information indicator in the first DCI.

In mode 4, cells without PDSCH transmission are determined from the scheduled cells, and a cell corresponding to the target information indicator at a preset position in the first DCI is further selected out of the cells without PDSCH transmission. For example, the multiple target information indicators of the cells without PDSCH transmission are re-ordered, further within the cells without PDSCH transmission, the cell corresponding to the first target information indicator is selected, or the cell corresponding to the last target information indicator is selected.

It is pointed out that when the reference cell is determined according to the cell index value, the cell with the maximum cell index value or the cell with the minimum cell index value is only an optional scheme as the reference cell, and other preset cells with designated index value can also be adopted.

For example, for the above mode 1, if there are n cells to be scheduled, the cell index values of the scheduled cells are sorted from small to large, and the 1-st to n-th scheduled cells can be defined. Specifically, the cell index values of the 1-st to n-th scheduled cells are sorted from small to large, that is, the 1-st scheduled cell is the cell with the smallest index value, and the n-th scheduled cell is the cell with the largest index value, then the cell with the preset cell index value can also be referred to the i-th scheduled cell, where i is an integer within a range of from 1 to n, and i is a first preset value.

For example, for the above mode 3, if there are m cells without PDSCH transmission in the scheduled cells, the m cells without PDSCH transmission are sorted according to the cell index value from small to large, and the 1-st to m-th scheduled cells can be defined. Specifically, the cell index value of the 1-st to m-th scheduled cells is from small to large, that is, the 1-st scheduled cell is the cell with the smallest index value, and the m-th scheduled cell is the cell with the largest index value, then the cell with preset cell index value can also be referred to the j-th scheduled cell, where j is an integer within a range from 1 to m, and j is a second preset value.

Similarly, the cell corresponding to the first target information indicator or the last target information indicator is only one optional scheme as the reference cell, and other preset locations may be designated. If the cell corresponding to the r-th target information indicator in the first DCI is used as the reference cell, r is a third preset value.

It should be noted that Alternative 1 above is applicable to use scenarios where the scheduled cells is(are) explicitly indicated in the first DCI.

**Alternative 2,** at least one preset specific cell in the target cell set is determined as the reference cell.

In some embodiments, the presetting of the specific cell is one of the following modes.

Mode 1: a cell with a predetermined cell index value.

In some embodiments, the cell with the predetermined cell index value includes a cell with the largest cell index value; or, a cell with the smallest cell index value.

That is, in Alternative 2, the cell having the maximum or minimum cell index value among the scheduled cells may be determined as the reference cell, and the enhanced Type-3 codebook indices are indicated by using the target information indicator(s) of the reference cell.

Mode 2, a cell corresponding to the one or more target information indicators of a preset position in the first DCI.

In some embodiments, the cell corresponding to the one or more target information indicators of a preset position in the first DCI includes a cell corresponding to a first target information indicator in the first DCI; or, a cell corresponding to a last target information indicator in the first DCI.

In one case, the number of MCS indicators in the first DCI is the same as the number of cells in the target cell set. For example, indicator information in DCI1_X is shown in Table 2 below:

**Table 2**

| Indicator Information | Meanings | Notes |
|---|---|---|
| FDRA Indicator 1 | Cell with the smallest Cell index (among the scheduled cells) | In the target cell set, N cells are configured in total, and in DCI1_X, FDRA indicators of N cells are configured and arranged according to an ascending order of cell indices of the configured cells (or the configuration order) |
| FDRA Indicator 2 | Cell with the next smallest Cell index (among the scheduled cells) | |
| ... | ... | |
| FDRA Indicator N | Cell with the largest Cell index (among the scheduled cells) | |
| MCS Indicator 1 | Cell with the smallest Cell index (among the scheduled cells) | In DCI1_X, total N pieces of MCS information blocks of N cells are included, and the N pieces of MCS information blocks are arranged according to an ascending order of index values of configured cells |
| MCS Indicator 2 | Cell with the next smallest Cell index (among the scheduled cells) | |
| ... | ... | |
| MCS Indicator N | Cell with the largest Cell index (among the scheduled cells) | |

In another case, the number of MCS indicators in the first DCI is the same as the number of scheduled cells in the target cell set (i.e., the number of MCS indicators in the first DCI may be different from the number of cells in the target cell set).

For example, indicator information in DCI1_X is shown in Table 3 below:

**Table 3**

| Indicator Information | Meanings | Notes |
|---|---|---|
| FDRA Indicator 1 | Cell with the smallest Cell index (among the scheduled cells) | In the target cell set, N cells are configured in total, and the FDRA information blocks of N cells are configured in DCI1_X, and are arranged according to an ascending order of the cell indices of the configured cells (or the configuration order) |
| FDRA Indicator 2 | Cell with the next smallest Cell index (among the scheduled cells) | |
| ... | ... | |
| FDRA Indicator N | Cell with the largest Cell index (among the scheduled cells) | |

(continued)

| Indicator Information | Meanings | Notes |
|---|---|---|
| MCS Indicator 1 | Cell with the smallest Cell index (among the scheduled cells) | In target cell set, there are N 1 scheduled cells in total, N1 scheduled MCS information blocks are configured in DCI1_X, and are arranged according to an ascending order of the scheduled cell indices |
| MCS Indicator 2 | Cell with the next smallest Cell index (among the scheduled cells) | |
| ... | ... | |
| MCS Indicator N1 | Cell with the largest Cell index (among the scheduled cells) | |

The arrangement order relationship of the scheduled cell information indicators shown in Table 2 and Table 3 above shows that the cell with the smallest cell index value in the target cell set is used as the reference cell, which can be equivalent to the cell corresponding to the first FDRA/MCS indicator in the first DCI (i.e., FDRA indicator 1/MCS indicator 1 in Table 2 and Table 3) as the reference cell. In addition, the cell with the largest cell index value in the target cell set is used as the reference cell, which can be equivalent to the cell corresponding to the last FDRA/MCS indicator in the first DCI (FDRA indicator N/MCS indicator N) as the reference cell.

In particular, in a scenario where the number of MCS indicators in the first DCI is the same as the number of scheduled cells in the target cell set, when the first DCI supports Type-3 codebook transmission and the UE is indicated that the first DCI does not contain enhanced Type-3 codebook index indicator but a plurality of enhanced Type-3 codebooks are configured, if the value of the FDRA indicator of the reference cell (e.g., the cell with the smallest Cell index) used for indicating the enhanced Type-3 HARQ-ACK codebook indices indicates no PDSCH scheduling, or the terminal is indicated that there is no PDSCH requiring ACK/NAK feedback, then there is no MCS information block of the reference cell in the first DCI, which may cause the terminal to be unable to determine the enhanced Type-3 HARQ-ACK codebook indices based on the MCS indicators. The method includes the following conditions:

the terminal defaults that the first DCI must contain the MCS indicator of the reference cell, for example, it must contain the MCS indicator of the cell with the smallest cell index value. That is, no matter what the FDRA number value of the reference cell is, the terminal assumes that the reference cell has been scheduled; or,
the base stations always configure an enhanced Type-3 indicator (pdsch-HARQ-ACK-EnhType3DCI-Field1_X), i.e., an 'Enhanced Type-3 HARQ-ACK codebook transmission indicator' for indicating the enhanced Type-3 codebook indices exists in the first DCI; or,
when the base station configures the enhanced Type-3 HARQ codebook (or the number of the configured codebooks is greater than 1), the base station transmits the MCS indicators of the cells in all the configured sets, regardless of whether the cells have scheduled PDSCH transmission; or,
the enhanced Type-3 codebook index is indicated using other information indicators in the first DCI. The other information indicators include Downlink Assignment Indicator (DAI) for the purpose of indication.

The DAI is used to count the number of the downlink scheduling signaling of the feedback HARQ-ACK, and when the first DCI indicates that the cells have no PDSCH scheduling or no PDSCH needing to do ACK/NAK feedback, the DAI field is a not-to-be-used field.

Mode 3, a cell having no PDSCH transmission and with a predetermined cell index value.

In some embodiments, the cell with the predetermined cell index value include the cell having the largest cell index value or the cell having the smallest cell index value.

In mode 3, cells without PDSCH transmission are determined from the target cell set, and a cell with a preset cell index value is further selected from the cells without PDSCH transmission. If reordering is carried out for multiple cell index values of cells without PDSCH transmission, then among the cells without PDSCH transmission, the cell with the largest cell index value or the cell with the smallest cell index value is selected.

Mode 4, a cell having no PDSCH transmission and corresponding to the one or more target information indicators of the preset position in the first DCI.

In some embodiments, the cell corresponding to the target information indicator of the preset position in the first DCI includes a cell corresponding to a first target information indicator in the first DCI or a cell corresponding to a last target information indicator in the first DCI.

In mode 4, cells having no PDSCH transmission are determined from the target cell set, and a cell corresponding to the target information indicator of a preset position in the first DCI is further selected from the cells having no PDSCH transmission. If the multiple target information indicators of the cells without PDSCH transmission are reordered, further, among the cells without PDSCH transmission, the cell corresponding to the first target information indicator is selected, or the cell corresponding to the last target information indicator is selected.

It is pointed out that when the reference cell is determined according to the cell index value, the cell with the largest cell index value or the cell with the smallest cell index value is only an optional scheme as the reference cell, and other preset cells with designated index value can also be adopted.

For example, for the above mode 1, if the target cell set includes p cells, the cell index values of the p cells are sorted from small to large, and the first to p-th cells can be defined. Specifically, the cell index values of the first to p-th cells are from small to large, that is, the first cell is the cell with the smallest index value, and the n-th cell is the cell with the largest index value, then the cell with the preset cell index value can also refer to as the i-th cell, where i is an integer within a range from 1 to p, and i is the fourth preset value.

For example, for the above mode 3, if there are g cells without PDSCH transmission in the target cell set, the g cells without PDSCH transmission are sorted from small to large according to their respective cell index values, and the 1-st to g-th scheduled cells can be defined. Specifically, the cell index values of the 1-st to g-th cells are from small to large, that is, the 1-st cell is the cell with the smallest index value, and the g-th scheduled cell is the cell with the largest index value, then the cell with preset cell index value can also refer to as the j-th scheduled cell, where j is an integer within a range from 1 to g, and j is the fifth preset value.

Similarly, the cell corresponding to the first target information indicator or the last target information indicator is only one optional scheme as reference cell, and other preset positions may be designated. If the cell corresponding to the f-th target information indicator in the first DCI is used as the reference cell, where f is a sixth preset value.

It should be noted that Alternative 2 above can be applied to an application scenario where the first DCI implicitly indicates a scheduled cell.

In one embodiment, the above mode 1 and mode 3 can be used in combination, specifically including: when determining that the first DCI includes an information indicator indicating no PDSCH transmission, the reference cell is determined using mode 3, otherwise (i.e., when there is no cell for scheduling without PDSCH in the first DCI), the reference cell is determined using mode 1.

In another embodiment, the above mode 2 and mode 4 can be used in combination, specifically including: when determining that the first DCI includes an information indicator indicating no PDSCH transmission, the reference cell is determined using mode 4, otherwise (i.e., when a cell without PDSCH scheduling does not exist in the first DCI), the reference cell is determined using a mode 2.

In one embodiment, the target information indicator includes one or more FDRA indicators and one or more MCS indicators. And in the step 103, one or more enhanced Type-3 HARQ codebook indices are determined according to the target information indicator of the reference cell in the first DCI, including:

determining whether the reference cell has PDSCH transmission according to the one or more FDRA indicators of the reference cell;
determining the one or more enhanced Type-3 HARQ codebook indices according to the one or more MCS indicators of the reference cell in the case of determining that the reference cell has no PDSCH transmission;
determining the one or more enhanced Type-3 HARQ codebook indices as default values, in the case of determining that the reference cell has PDSCH transmission.

In some embodiments, the default values are zero(0).

In some embodiments, the determining the one or more enhanced Type-3 HARQ codebook indices according to the one or more MCS indicators of the reference cell includes the following two modes:

Mode 1, using all bits in MCS indicators of the reference cell to determine index values of enhanced Type-3 codebooks; or,
Mode 2, using lowest M bits or highest M bits in MCS indicators of the reference cell to determine index values of enhanced Type-3 codebooks, where $M = \lceil \log_2(n_{CB}) \rceil$, where, $n_{CB}$ is a number of enhanced Type-3 codebook indices configured for the base station.

For example, assuming that M = 3, the MCS indicators include 5 bits, and the index values of the Type-3 codebooks determined using the MCS indicators can be seen in the following Table 4.

**Table 4**

| MCS Indicators (5 bits) | Mode 1 | Mode 2 |
|---|---|---|
| b4, b3, b2, b1, b0 | Determining the codebook index using b4, b3, b2, b1, b0 | Determine the codebook index using b4, b3, b2, or using b2, b1, b0 |

It should be noted that mode 2 only uses part of bits in the MCS indicators to indicate the codebook index, and the number of bits used depends on the number of indices of the enhanced Type-3 codebooks configured at a higher layer. In this manner, extra space can be left in advance for candidate protocol enhancements.

In one embodiment, the method for determining enhanced Type-3HARQ codebook indices further includes:

receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator; determining, based on the configuration information, whether the first DCI supports triggering Type-3 HARQ codebook transmission, and whether the first DCI includes an enhanced Type-3 codebook indicator.

In this embodiment, whether the first DCI supports triggering Type-3 HARQ codebook transmission and whether the first DCI includes an enhanced Type-3 codebook index indicator are indicated in advance by the base station based on the configuration information. In this method, under the condition of determining that the first DCI does not support triggering Type-3 HARQ codebook transmission, it is not necessary to determine one or more enhanced Type-3 HARQ codebook indices; under the condition of that the first DCI includes enhanced Type-3 codebook index indicator, the enhanced Type-3 codebook indices are determined directly according to the enhanced Type-3 codebook index indicator.

In one embodiment, the receiving the configuration information sent by the base station includes:

receiving the configuration information carried by the base station through one or more one-shot feedback indication fields, wherein the configuration information is used for indicating whether the first DCI includes Type-3 HARQ response codebook transmission indicator(s);
receiving the configuration information carried by the base station through one or more enhanced Type-3 indication fields, wherein the configuration information is used for indicating whether the first DCI includes enhanced Type-3 codebook indices indicator(s).

In some embodiments, the one-shot feedback indication field is a pdsch-HARQ-ACK-OneShotFeedback1_X field, the Type-3 HARQ response codebook transmission indication is a OneShotFeedback field, the enhanced Type-3 indication field is a pdsch-HARQ-ACK-EnhType3DCI-Field1_X, and the enhanced Type-3 codebook indicator field is an Enhanced Type-3 codebook indicator.

When realized, the base station configures Type-3 HARQ-ACK codebook information for multi-cell scheduling signaling (such as DCI1_X) through configuration information, which may include at least one of configuration information 1 and configuration information 2.

**Configuration Information 1:** The "one time feedback (pdsch-HARQ-ACK-OneShotFeedback1_X)" field is used to indicate whether "Type-3 HARQ-ACK codebook transmission indication (OneShotFeedback)" is included in DCI1_X, if "Type-3 HARQ-ACK codebook transmission indication" is included in DCI, it indicates that DCI1_X supports triggering Type-3 HARQ-ACK codebook transmission, otherwise it does not support it. The configuration information 1 can be configured based on a cell set or a cell group. Here, the cell group includes a plurality of cell sets.

For example, assuming that the configuration information 1 makes a configuration indication based on a cell set, if the configuration information 1 indicates that DCI1_X supports triggering of a Type-3HARQ codebook for cell set1 (set1), the DCI1_X for scheduling set1 includes "Type-3HARQ-ACK codebook transmission indication (OneShotFeedback)" indication information; if the configuration information 1 indicates that DCI1_X does not support triggering of a Type-3HARQ codebook for cell set2 (set2), the DCI1_X for scheduling set2 does not include "Type-3 HARQ-ACK codebook transmission indication (OneShotFeedback)" indication information.

**Configuration Information 2:** "Enhanced Type3 Indicator (pdsch-HARQ-ACK-EnhType3DCI-Field1_X)" field is used to indicate whether "Enhanced Type3 codebook indicator (Enhanced Type3 codebook index) for Enhanced Type3 HARQ-ACK codebook transmission" is included in DCI1_X or not; if not, the number of bits of the Enhanced Type3 codebook index information field in DCI1_X is 0; if it is included, the number of bits of the Enhanced Type3 codebook index information field in DCI1_X is $\lceil \log_2(n_{CB}) \rceil$, where, $n_{CB}$ is the index number of the enhanced Type-3 codebook configured by the base station. The configuration information 2 can be configured based on a cell set or a cell group. Here, the cell group includes a plurality of cell sets.

In one alternative embodiment, the one or more target information indicators of the reference cell comprises one or more MCS indicators; the determining one or more enhanced Type-3 HARQ codebook indices according to one or more target information indicators of the reference cell in the first DCI includes:

determining one or more enhanced Type-3 HARQ codebook indices according to the one or more MCS indicators of a plurality of reference cells, wherein each of the plurality of reference cells corresponds to one of the one or more MCS indicators.

In this embodiment, when there are multiple reference cells, the one or more enhanced Type-3 HARQ codebook indices can be determined jointly by the multiple MCS indicators corresponding to the multiple reference cells.

Referring to FIG. 2, the disclosed embodiment provides a method for determining one or more enhanced Type-3 HARQ codebook indices, which is performed by a base station, the method including:

Step 201, sending a first DCI to a terminal, the first DCI being used for scheduling at least one downlink cell in a target cell set;

wherein one or more target information indicators of the reference cell in the first DCI is used to indicate one or more enhanced Type-3 HARQ codebook indices, and the reference cell is at least one cell in the target cell set.

In some embodiments, the one or more target information indicators include one or more FDRA indicators and one or more MCS indicators.

In some embodiments, the first DCI is a DCI format 1_X (DCI1_X for short). The one or more target information indicators include one or more FDRA indicators and one or more MCS indicators.

In this step, the target cell set includes a plurality of cells, and the first DCI may schedule one or more cells in the target cell set at a time. If the target cell set is configured with four cells (cell-1, cell-2, cell-3, cell-4), the first DCI can schedule one or more of the four cells, and which cell(s) is(are) specifically scheduled are indicated by the first DCI. The indication modes can be introduced by referring to the terminal side, and will not be described again here.

In the above embodiment, when the base station schedules at least one downlink cell in the target cell set through the first DCI, the target information indicator of the reference cell in the first DCI is used to indicate an enhanced Type-3 HARQ codebook index, wherein the reference cell is at least one cell in the target cell set. Thus, the one or more enhanced Type-3 HARQ codebook indices can be transmitted in the scenario of multi-cell scheduling.

In one embodiment, the reference cell includes one of two cases:

Case 1, at least one preset specific cell among the scheduled cells, wherein the scheduled cells are indicated through co-scheduled cell indicator(s) in the first DCI;

Case 2: at least one preset cell within the target cell set.

In some embodiments, in case 1 and case 2 above, the specific cell is preset in one of the following modes: Mode 1, a cell with a predetermined cell index value.

In some embodiments, the cell with the predetermined cell index value includes the cell having the largest cell index value or the cell having the smallest cell index value.

Mode 2, a cell corresponding to the one or more target information indicators of a preset position in the first DCI.

In some embodiments, the cell corresponding to the one or more target information indicators of a preset position in the first DCI includes a cell corresponding to a first target information indicator in the first DCI or a cell corresponding to a last target information indicator in the first DCI.

Table 1 at the terminal side shows that the cell with the smallest cell index value within the scheduled cells is used as the reference cell, and the cell corresponding to the first FDRA/MCS indicator (FDRA information block N/MCS information block 1) in the first DCI is used as the reference cell; and the cell with the largest cell index value within the scheduled cells is used as the reference cell, and the cell corresponding to the last FDRA/MCS indicator (FDRA information block N/MCS information block N) is used as the reference cell.

Mode 3, a cell having no PDSCH transmission and with a predetermined cell index value.

In some embodiments, the cells with predetermined cell index values include the cell having the largest cell index value or the cell having the smallest cell index value.

In mode 3, cells without PDSCH transmission are determined from the scheduled cells, and a cell with a predetermined cell index value is further selected from the cells without PDSCH transmission. If the cell with the largest or smallest cell index value is selected from the cells without PDSCH transmission, it is determined as the reference cell.

Mode 4, a cell having no PDSCH transmission and corresponding to the one or more target information indicators of the preset position in the first DCI

In some embodiments, the cell corresponding to the one or more target information indicators of the preset position in the first DCI includes a cell corresponding to a first target information indicator in the first DCI or a cell corresponding to a last target information indicator in the first DCI.

In mode 4, cells without PDSCH transmission are determined from the scheduled cells, and a cell corresponding to the one or more target information indicators of the preset position in the first DCI is further selected from the cells without PDSCH transmission. If the multiple target information indicators of the cells without PDSCH transmission are reordered, further, within the cells without PDSCH transmission, the cell corresponding to the first target information indicator is selected, or the cell corresponding to the last target information indicator is selected.

It is pointed out that when the reference cell is determined according to the cell index value, the cell with the largest cell index value or the cell with the smallest cell index value is only an optional scheme as the reference cell, and other preset cell(s) with designated index value(s) can also be adopted.

In one embodiment, in the case where the first DCI does not include the one or more co-scheduled indicators, the method further includes:

indicating the cells in the target cell set as having no PDSCH transmission, and wherein the one or more target information indicators of the cells are used for indicating one or more same enhanced Type-3 HARQ codebook indices; or,

indicating the cells in the target cell set as having PDSCH transmission.

For example, if the base station indicates the scheduled cell(s) in an implicit manner, the FDRA indicators of the cells in the target cell set may be set to the information field value for indicating without the PDSCH scheduling, and the MCS indicator values of the cells may be configured to the same setting. Thus, the protocol may be simplified and the terminal may obtain the index value of the Type-3 codebook from any one of the scheduled cells.

For example, if the base station uses an implicit approach to indicate the scheduled cell(s), the FDRA indicators of all scheduled cells in the target cell set may be set to an information field value for indicating with the PDSCH scheduling. Thus, the protocol can be simplified, and the terminal can obtain the index value of the Type-3 codebook from any one of the scheduled cells.

In one embodiment, in the case where the first DCI does include the one or more co-scheduled indicators, the method further includes:

indicating a number of the one or more scheduled cells being limited to 1 through the one or more co-scheduled indicators; or,

indicating all of the one or more scheduled cells as having no PDSCH transmission, and wherein the one or more target information indicators of the cells are all used for indicating one or more same enhanced Type-3 HARQ codebook indices; or,

indicating all of the one or more scheduled cells as having PDSCH transmission.

For example, when DCI1_X indicates a Type-3 HARQ codebook that needs to be transmitted, such as when the value of "Type-3 HARQ-ACK codebook transmission indicator" is 1, the base station indicates that the number of scheduled cells is 1, and by limiting one scheduled cell, i.e., not expecting more than one cell to be scheduled, the terminal can determine the index value of the Type-3 codebook according to the target information indicator of the scheduled cell. This can simplify the complexity of the protocol and make maximum use of related technologies.

For example, when the base station indicates the FDRA indicator of the scheduled cell, the FDRA indicators of all the scheduled cells are set to an information field value for indicating with the PDSCH scheduling, and the MCS indicator values of all the scheduled cells are the same. Alternatively, the FDRA indicators of all the scheduled cells are set to an information field value for indicating with the PDSCH scheduling. Thus, the protocol can be simplified, and the terminal can determine the index value of the Type-3 codebook according to the target information indicator of any one of the scheduled cells.

In one embodiment, the method for determining one or more enhanced Type-3 HARQ codebook indices further includes:

sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

In an alternative embodiment, the sending configuration information to the terminal includes:

sending configuration information to the terminal through one or more one-shot feedback indication fields, wherein the configuration information is used for indicating whether the first DCI includes Type-3 HARQ response codebook transmission indicator(s);

sending configuration information to the terminal through one or more enhanced Type-3 indication fields, wherein the configuration information is used for indicating whether the first DCI includes enhanced Type-3 codebook indices indicator(s).

In an alternative embodiment, a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

In some embodiments, the one-shot feedback indication field(s) is a pdsch-HARQ-ACK-OneShotFeedback1_X field, the Type-3 HARQ response codebook transmission indication is a OneShotFeedback field. In addition, the enhanced Type-3 indication field(s) is a pdsch-HARQ-ACK-EnhType3DCI-Field1_X, and the enhanced Type-3 codebook indicator is an Enhanced Type-3 codebook indicator.

When realized, the base station configures Type-3 HARQ-ACK codebook information for multi-cell scheduling signaling (such as DCI1_X) through configuration information, which may include at least one of configuration information 1 and configuration information 2.

**Configuration Information 1:** The "one time feedback (pdsch-HARQ-ACK-OneShotFeedback1_X)" field is used to indicate whether "Type-3 HARQ-ACK codebook transmission indication (OneShotFeedback)" is included in DCI1_X, if "Type-3 HARQ-ACK codebook transmission indication" is included in DCI, it indicates that DCI1_X supports triggering Type-3 HARQ-ACK codebook transmission, otherwise it does not support it. The configuration information 1 can be configured based on a cell set or a cell group. Here, the cell group includes a plurality of cell sets.

For example, assuming that the configuration information 1 makes a configuration indication based on a cell set, if the configuration information 1 indicates that DCI1_X supports triggering of a Type-3HARQ codebook for cell set1 (set1), the DCI1_X for scheduling set1 includes "Type-3HARQ-ACK codebook transmission indication (OneShotFeedback)" indication information; if the configuration information 1 indicates that DCI1_X does not support triggering of a Type-3HARQ codebook for cell set2 (set2), the DCI1_X for scheduling set2 does not include "Type-3 HARQ-ACK codebook transmission indication (OneShotFeedback)" indication information.

**Configuration Information 2:** "Enhanced Type3 Indicator (pdsch-HARQ-ACK-EnhType3DCI-Field1_X)" field is used to indicate whether "Enhanced Type3 codebook indicator (Enhanced Type3 codebook index) for Enhanced Type3 HARQ-ACK codebook transmission" is included in DCI1_X or not; if not, the number of bits of the Enhanced Type3 codebook index information field in DCI1_X is 0; if it is included, the number of bits of the Enhanced Type3 codebook index information field in DCI1_X is $\lceil \log_2(n_{CB}) \rceil$, where, $n_{CB}$ is the index number of the enhanced Type-3 codebook configured by the base station. The configuration information 2 can be configured based on a cell set or a cell group. Here, the cell group includes a plurality of cell sets.

In the above scheme, for the application scene of one DCI scheduling multiple cells, the present disclosure provides a transmission method for enhanced Type-3 HARQ ACK codebook indices. In particular, for two different methods of determining the scheduled cell(s), i.e. explicit and implicit, it provides a scheme for determining HARQ codebook indices according to FDRA indicator(s) or MCS indicator(s), and solves the problem of how to indicate enhanced Type-3 codebook indices to a terminal in the multi-cell scheduling scene in related technology, and improves the flexibility of scheduling.

Referring to FIG. 3, an embodiment of the present disclosure provides an apparatus 300 for determining one or more enhanced Type-3 HARQ codebook indices, applied to a terminal, including:

a first receiving module 301 for receiving a DCI sent by a base station, the first DCI being used for scheduling at least one downlink cell in a target cell set;
a first determination module 302 for determining at least one reference cell from the target cell set;
a second determination module 303 for determining one or more enhanced Type-3 HARQ codebook indices according to one or more target information indicators of the reference cell in the first DCI.

In some embodiments, a first determination module 302 includes:
a first determination submodule for determining at least one reference cell from the target cell set, in a case that the first DCI supports triggering Type-3 HARQ codebook transmission and an enhanced Type-3 codebook indicator is not included in the first DCI.

In some embodiments, a first determination module 302 includes:
a second determination sub-module for determining one or more scheduled cells from the target cell set according to one or more co-scheduled indicators in the first DCI; determining at least one predetermined cell in the one or more scheduled cells as the reference cell; or, determining at least one predetermined cell in the target cell set as the reference cell.

In some embodiments, the predetermined cell is one of:

a cell with a predetermined cell index value; or,
a cell corresponding to the one or more target information indicators of a preset position in the first DCI; or,

a cell having no PDSCH transmission and with a predetermined cell index value; or,
a cell having no PDSCH transmission and corresponding to the one or more target information indicators of the preset position in the first DCI.

In some embodiments, the cell with the predetermined cell index value includes:

a cell with the largest cell index value; or,
a cell with the smallest cell index value.

In some embodiments, the cell corresponding to the one or more target information indicators of the preset position in the first DCI includes:

a cell corresponding to a first target information indicator in the first DCI; or,
a cell corresponding to a last target information indicator in the first DCI.

In some embodiments, the one or more target information indicators include one or more FDRA) indicators and one or more MCS indicators, and a second determination module 303 includes:

a third determination submodule for determining whether the reference cell has PDSCH transmission according to the one or more FDRA indicators of the reference cell;
a fourth determination submodule for determining the one or more enhanced Type-3 HARQ codebook indices according to the one or more MCS indicators of the reference cell in the case of determining that the reference cell has no PDSCH transmission;
a fifth determination submodule for determining the one or more enhanced Type-3 HARQ codebook indices as default values, in the case of determining that the reference cell has PDSCH transmission.

In some embodiments, the apparatus 300 further includes:

a second receiving module for receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator;
a third determination module for determining, based on the configuration information, whether the first DCI supports triggering Type-3 HARQ codebook transmission, and whether the first DCI includes an enhanced Type-3 codebook indicator.

In some embodiments, the second receiving module includes:

a first receiving submodule for receiving the configuration information carried by the base station through one or more one-shot feedback indication fields, wherein the configuration information is used for indicating whether the first DCI includes Type-3 HARQ response codebook transmission indicator(s);
a second receiving submodule for receiving the configuration information carried by the base station through one or more enhanced Type-3 indication fields, wherein the configuration information is used for indicating whether the first DCI includes enhanced Type-3 codebook indices indicator(s).

In some embodiments, a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

In some embodiments, the one or more target information indicators of the reference cell comprises one or more MCS indicators; the second determination module 303 includes:
a sixth determination submodule for determining one or more enhanced Type-3 HARQ codebook indices according to the one or more MCS indicators of a plurality of reference cells, wherein each of the plurality of reference cells corresponds to one of the one or more MCS indicators.

It should be noted that the apparatus 300 provided by the disclosed embodiment can realize all the method steps realized by the method embodiment at the terminal side and can achieve the same or similar technical effect, and the parts and beneficial effects that are the same as the method embodiment in the above embodiments are not described in detail herein.

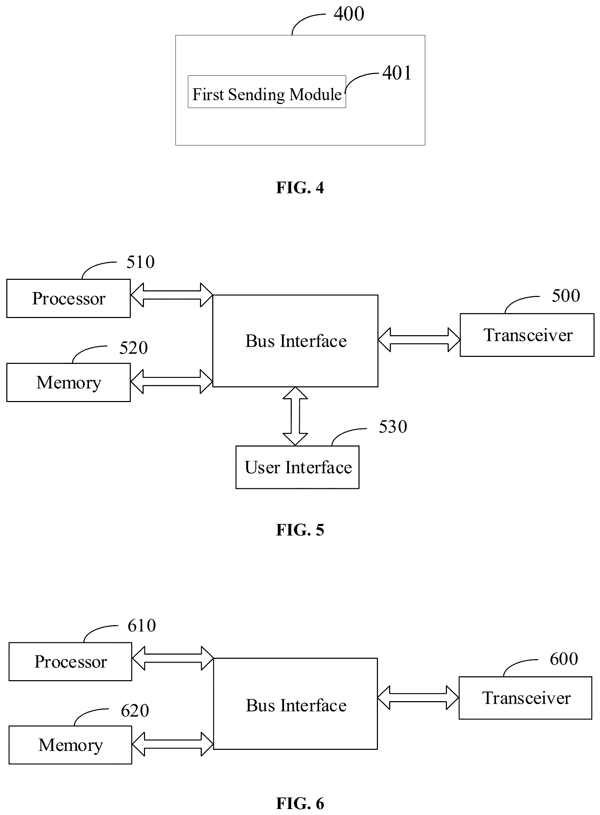

Referring to FIG. 4, an embodiment of the present disclosure provides an apparatus 400 for determining one or more enhanced Type-3 HARQ codebook indices, for use in a base station, including:

a first sending module 401 for sending a first DCI to a terminal, the first DCI being used for scheduling at least one downlink cell in a target cell set;
wherein one or more target information indicators of the reference cell in the first DCI is used to indicate one or more enhanced Type-3 HARQ codebook indices, and the reference cell is at least one cell in the target cell set.

In some embodiments, the reference cell is:

at least one predetermined cell in one or more scheduled cells, wherein the one or more scheduled cells are indicated through one or more co-scheduled indicators in the first DCI; or,
at least one predetermined cell in the target cell set.

In some embodiments, the predetermined cell is one of:

a cell with a predetermined cell index value; or,
a cell corresponding to the one or more target information indicators of a preset position in the first DCI; or,
a cell having no PDSCH transmission and with a predetermined cell index value; or,
a cell having no PDSCH transmission and corresponding to the one or more target information indicators of the preset position in the first DCI.

In some embodiments, the cell with the predetermined cell index value includes:

a cell with the largest cell index value; or,
a cell with the smallest cell index value.

In some embodiments, the cell corresponding to the one or more target information indicators of the preset position in the first DCI includes:

a cell corresponding to a first target information indicator in the first DCI; or,
a cell corresponding to a last target information indicator in the first DCI.

In some embodiments, the apparatus 400 further includes one of the following:

a first indication module for indicating the cells in the target cell set as having no PDSCH transmission, and wherein the one or more target information indicators of the cells are used for indicating one or more same enhanced Type-3 HARQ codebook indices, in the case where the first DCI does not include the one or more co-scheduled indicators;
a second indication module for indicating the cells in the target cell set as having PDSCH transmission, in the case where the first DCI does not include the one or more co-scheduled indicators.

In some embodiments, the apparatus 400 further includes one of the following:

a third indication module for indicating a number of the one or more scheduled cells being limited to 1 through the one or more co-scheduled indicators, in the case where the first DCI does include the one or more co-scheduled indicators;
a fourth indication module for indicating all of the one or more scheduled cells as having no PDSCH transmission, and wherein the one or more target information indicators of the cells are all used for indicating one or more same enhanced Type-3 HARQ codebook indices, in the case where the first DCI does include the one or more co-scheduled indicators;
a fifth indication module for indicating all of the one or more scheduled cells as having PDSCH transmission, in the case where the first DCI does include the one or more co-scheduled indicators.

In some embodiments, the one or more target information indicators include one or more FDRA indicators and one or more MCS indicators.
In some embodiments, the apparatus 400 further includes:
a second sending module for sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

In some embodiments, the second sending module includes:

a first sending submodule for sending configuration information to the terminal through one or more one-shot feedback indication fields, wherein the configuration information is used for indicating whether the first DCI includes Type-3 HARQ response codebook transmission indicator(s);
a second transmitting submodule for sending configuration information to the terminal through one or more enhanced Type-3 indication fields, wherein the configuration information is used for indicating whether the first DCI includes enhanced Type-3 codebook indices indicator(s).

In some embodiments, a number of bits occupied by the enhanced Type-3 codebook indices indicator(s) is where, $n_{CB}$ is a number of enhanced Type-3 codebook indices configured for the base station.

It should be noted that the above device 400 provided by the disclosed embodiment can realize all the method steps realized by the above method embodiment at the base station side, and can achieve the same or similar technical effect. The same parts and beneficial effects as those of the method embodiment in the above embodiments will not be described in detail here.

Referring to FIG. 5, a disclosed embodiment provides a terminal comprising a processor 510, and a memory 520 connected to the processor 510 through a bus interface, the memory 520 for storing program and data used by the processor 510 in performing operations, the processor 510 is configured for calling and executing the processes and data stored in the memory 520. The transceiver 500 is connected to the bus interface for receiving and sending data under the control of the processor 510, the processor 510 being arranged to read a program in the memory 520 and to carry out the following processes:

receiving a first DCI sent by a base station, the first DCI being used for scheduling at least one downlink cell in a target cell set;
determining at least one reference cell from the target cell set; and
determining one or more enhanced Type-3 HARQ codebook indices according to one or more target information indicators of the reference cell in the first DCI.

In FIG. 5, the bus architecture may include any number of interconnected buses and bridges, with various circuits of one or more processors, represented by processor 510, and memory, represented by memory 520, linked together. The bus architecture may also link together various other circuits such as peripherals, regulators, and power management circuits, which are well known in the art and are therefore not described further herein. The bus interface provides an interface. The transceiver 500 may be a plurality of components, i.e., including a transmitter and a receiver, providing a unit for communicating with various other devices over transmission media including, for example, transmission media such as wireless channels, wireline channels, fiber optic cables, and the like. For different user devices, the user interface 530 may also be an interface capable of externally connecting desired devices, including but not limited to keypads, displays, speakers, microphones, joysticks, etc.

The processor 510 is responsible for managing the bus architecture and general processing, and the memory 520 may store data used by the processor 510 in performing operations.

In some embodiments, the processor 510 is configured to read programs in the memory 520, performing the following processes:
determining at least one reference cell from the target cell set, in a case that the first DCI supports triggering Type-3 HARQ codebook transmission and an enhanced Type-3 codebook indicator is not included in the first DCI.

In some embodiments, the processor 510 is configured to read processes in the memory 520, performing the following processes:

determining one or more scheduled cells from the target cell set according to one or more co-scheduled indicators in the first DCI;
determining at least one predetermined cell in the one or more scheduled cells as the reference cell; or, determining at least one predetermined cell in the target cell set as the reference cell.

In some embodiments, the predetermined cell is one of:

a cell with a predetermined cell index value; or,
a cell corresponding to the one or more target information indicators of a preset position in the first DCI; or,
a cell having no PDSCH transmission and with a predetermined cell index value; or,
a cell having no PDSCH transmission and corresponding to the one or more target information indicators of the preset position in the first DCI.

In some embodiments, the cell with the predetermined cell index value includes:

a cell with the largest cell index value; or,
a cell with the smallest cell index value.

In some embodiments, the cell corresponding to the one or more target information indicators of the preset position in the first DCI includes:

a cell corresponding to a first target information indicator in the first DCI; or,
a cell corresponding to a last target information indicator in the first DCI.

In some embodiments, the one or more target information indicators comprise one or more FDRA indicators and one or more MCS indicators.

In some embodiments, the processor 510 is further configured to read programs in the memory 520 to perform the following processes:

determining whether the reference cell has PDSCH transmission according to the one or more FDRA indicators of the reference cell;
determining the one or more enhanced Type-3 HARQ codebook indices according to the one or more MCS indicators of the reference cell in the case of determining that the reference cell has no PDSCH transmission;
determining the one or more enhanced Type-3 HARQ codebook indices as default values, in the case of determining that the reference cell has PDSCH transmission.

In some embodiments, the processor 510 is further configured to read processes in the memory 520 to perform the following processes:

receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator;
determining, based on the configuration information, whether the first DCI supports triggering Type-3 HARQ codebook transmission, and whether the first DCI includes an enhanced Type-3 codebook indicator.

In some embodiments, the processor 510 is further configured to read processes in the memory 520 to perform the following processes:

receiving the configuration information carried by the base station through one or more one-shot feedback indication fields, wherein the configuration information is used for indicating whether the first DCI includes Type-3 HARQ response codebook transmission indicator(s);
receiving the configuration information carried by the base station through one or more enhanced Type-3 indication fields, wherein the configuration information is used for indicating whether the first DCI includes enhanced Type-3 codebook indices indicator(s).

In some embodiments, a number of bits occupied by the enhanced Type-3 codebook indices indicator(s) is where, $n_{CB}$ is a number of enhanced Type-3 codebook indices configured for the base station.

In some embodiments, the target information indicator of the reference cell includes one or more MCS indicators.

In some embodiments, the processor 510 is configured to read processes in the memory 520, performing the following processes:

determining one or more enhanced Type-3 HARQ codebook indices according to the one or more MCS indicators of a plurality of reference cells, wherein each of the plurality of reference cells corresponds to one of the one or more MCS indicators.

In some embodiments, the processor 510 may be a central processing unit (CPU), an application specific integrated circuit (ASIC), a field-programmable gate array (FPGA), or a complex programmable logic device (CPLD), or the processor may be a multi-core architecture.

The processor is adapted to execute any of the methods provided by embodiments of the disclosure in accordance with the obtained executable instructions by invoking a computer program stored in memory. The processor and the memory may also be physically separated.

Referring to FIG. 6, a disclosed embodiment provides a base station comprising a processor 610, and a memory 620 connected to the processor 610 through a bus interface, the memory 620 for storing programs and data used by the processor 610 in performing operations, the processor 610 is configured for calling and executing the processes and data stored in the memory 620.

The transceiver 600 is connected to the bus interface for receiving and transmitting data under the control of a processor 610, the processor 610 being arranged to read a process in the memory 620 and to carry out the following processes:

sending a first DCI to a terminal, the first DCI being used for scheduling at least one downlink cell in a target cell set; wherein one or more target information indicators of the reference cell in the first DCI is used to indicate one or more enhanced Type-3 HARQ codebook indices, and the reference cell is at least one cell in the target cell set.

Here, in FIG. 6, the bus architecture may include any number of interconnected buses and bridges, specifically one or more programs represented by processor 610 and various circuits of memory represented by memory 620 linked together. The bus architecture may also link together various other circuits such as peripherals, regulators, and power management circuits, which are well known in the art and are therefore not described further herein. The bus interface provides an interface. The transceiver 600 may be a plurality of components, i.e., include a transmitter and a receiver, providing a unit for communicating with various other devices over transmission media, including wireless channels, wireline channels, optical cables, and the like. The processor 610 is responsible for managing the bus architecture and general processing, and the memory 620 may store data used by the processor 610 in performing operations.

The processor 610 may be a CPU, an ASIC, an FPGA or a CPLD, and the processor may be a multi-core architecture.

In some embodiments, the reference cell is:

at least one predetermined cell in one or more scheduled cells, wherein the one or more scheduled cells are indicated through one or more co-scheduled indicators in the first DCI; or, at least one predetermined cell in the target cell set.

In some embodiments, the predetermined cell is one of:

a cell with a predetermined cell index value; or, a cell corresponding to the one or more target information indicators of a preset position in the first DCI; or, a cell having no Physical Downlink Shared Channel (PDSCH) transmission and with a predetermined cell index value; or, a cell having no PDSCH transmission and corresponding to the one or more target information indicators of the preset position in the first DCI.

In some embodiments, the cell with the predetermined cell index value includes:

a cell with the largest cell index value; or, a cell with the smallest cell index value.

In some embodiments, the cell corresponding to the one or more target information indicators of the preset position in the first DCI includes:

a cell corresponding to a first target information indicator in the first DCI; or, a cell corresponding to a last target information indicator in the first DCI.

In some embodiments, the processor 610 is further configured to read a process in the memory 620 to perform the following process, in the case where the first DCI does not include the one or more co-scheduled indicators:

indicating the cells in the target cell set as having no PDSCH transmission, and wherein the one or more target information indicators of the cells are used for indicating one or more same enhanced Type-3 HARQ codebook indices; or, indicating the cells in the target cell set as having PDSCH transmission.

In some embodiments, the processor 610 is further configured to read a process in the memory 620 to perform the following process, in the case where the first DCI does include the one or more co-scheduled indicators:

indicating a number of the one or more scheduled cells being limited to 1 through the one or more co-scheduled indicators;

indicating all of the one or more scheduled cells as having no PDSCH transmission, and wherein the one or more target information indicators of the cells are all used for indicating one or more same enhanced Type-3 HARQ codebook indices; or,

indicating all of the one or more scheduled cells as having PDSCH transmission.

In some embodiments, the one or more target information indicators include one or more FDRA indicators and one or more MCS indicators.

In some embodiments, the processor 610 is further configured to read processes in the memory 620 to perform the following processes:

sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

In some embodiments, the processor 610 is further configured to read processes in the memory 620 to perform the following processes:

sending configuration information to the terminal through one or more one-shot feedback indication fields, wherein the configuration information is used for indicating whether the first DCI includes Type-3 HARQ response codebook transmission indicator(s);

sending configuration information to the terminal through one or more enhanced Type-3 indication fields, wherein the configuration information is used for indicating whether the first DCI includes enhanced Type-3 codebook indices indicator(s).

In some embodiments, a number of bits occupied by the enhanced Type-3 codebook indices indicator(s) is where, $n_{CB}$ is a number of enhanced Type-3 codebook indices configured for the base station.

The present disclosure also provides a processor-readable storage medium storing computer programs for causing the processor to execute a method for determining one or more enhanced Type-3 HARQ codebook indices as the terminal side or the base station side.

The processor readable storage medium may be any available medium or data storage device that can be accessed by the processor, including, but not limited to, magnetic storage (e.g., floppy disk, hard disk, magnetic tape, Magneto-Optical Disk, MO, etc.), optical storage (e.g., Compact Disk, CD, Digital Versatile Disc, DVD, Blu-ray Disc, High-Definition Versatile Disc, HVD, etc.), and semiconductor storage (e.g., Read-Only Memory, ROM, Erasable Programmable ROM, EPROM, Electrically EPROM, EEPROM, NAND flash, Solid State Disk or Solid State Drive, SSD, etc.).

It is noted that the partitioning of the cells in the disclosed embodiments is schematic and is merely a logical function partitioning, and that other partitioning may be possible in practical implementations. In addition, the functional units in various embodiments of the present disclosure may be integrated in one processing unit, may be physically separate from each other, or may be integrated into one unit with two or more units. The integrated unit can be realized in the form of hardware or software functional unit.

The integrated units, if implemented in the form of software functional units and sold or used as stand-alone products, may be stored in a processor readable storage medium. Based on such understanding, the disclosed technical solution, in essence or as a contribution to the related art, or all or part of the technical solution, may be embodied in the form of a software product, stored in a storage medium, comprising instructions for causing a computer device (which may be a personal computer, server, or network device, etc.) or processor to perform all or part of the steps of the method described in the various embodiments of the disclosure. The storage medium includes U disk, mobile hard disk, read-only memory, random access memory, magnetic disk, CD, etc.

It should be understood by those skilled in the art that embodiments of the present disclosure may be provided as methods, systems, or computer process products. Accordingly, the present disclosure may take the form of a complete hardware embodiment, a complete software embodiment, or a combination of software and hardware aspects of an embodiment. Further, the present disclosure may take the form of a computer process product embodied on one or more computer usable storage media (including, but not limited to, disk storage, optical storage, etc.) having computer usable process code embodied therein.

These processor-executable instructions may also be stored in a processor-readable memory that can direct a computer or other programmable data processing device to operate in a particular manner such that the instructions stored in the processor-readable memory produce an article of manufacture that includes instruction means that implement the functions specified in the flowchart flow or flows and / or the block or blocks of the block diagram.

The processor-executable instructions may also be loaded onto a computer or other programmable data processing device such that a series of operational steps are performed on the computer or other programmable device to produce the computer-implemented process such that the instructions executed on the computer or other programmable device provide steps for implementing the functions specified in the flowchart flow or flows and/or the block diagram block or blocks.

It should be noted that the above division of modules is only a division of logical functions, and in practical implementation, it can be fully or partially integrated into a physical entity or physically separated. The modules may be realized in the form of software calling through processing component, hardware calling through processing component, or hardware calling through processing component. For example, the determination module may be a processing component set up separately, or may be integrated in one chip of the above-mentioned device, in addition, it may be stored in the memory of the above-mentioned device in the form of process code, and one processing component of the above-mentioned device can be used for calling and executing the functions of the above-mentioned determination module. Other modules are implemented similarly. In addition, all or part of these modules can be integrated together or implemented independently. The processing component described herein may be an integrated circuit having signal processing capability. In the implementation, the steps or modules of the above method can be accomplished by integrated logic circuits in the hardware of the processor components or by instructions in the form of software.

For example, each module, unit, subunit or submodule may be one or more integrated circuits configured to implement the above method, such as one or more application specific integrated circuits (ASICs), or one or more digital signal processors (DSPs), or one or more field programmable gate arrays (FPGAs), etc. For example, when one of the above modules is implemented in the form of a processing component dispatch process code, the processing component may be a general-purpose processor, such as a Central Processing Unit (CPU) or other processor capable of invoking process code. For example, these modules can be integrated together in the form of a system-on-a-chip (SOC).

Obviously, various changes and modifications can be made to the disclosure by those skilled in the art without departing from the spirit and scope of the disclosure. Thus, the disclosure is intended to include such modifications and variations as fall within the scope of the claims and their equivalents.

**Claims**

1. A method for determining enhanced Type-3 Hybrid Automatic Repeat request (HARQ) codebook indices, which is performed by a terminal, the method comprising:

   receiving a first Downlink Control Information (DCI) sent by a base station, the first DCI being used for scheduling at least one downlink cell in a target cell set;
   determining at least one reference cell from the target cell set; and
   determining one or more enhanced Type-3 HARQ codebook indices according to one or more target information indicators of the reference cell in the first DCI.

2. The method for determining one or more enhanced Type-3 HARQ codebook indices according to claim 1, wherein the determining at least one reference cell from the target cell set comprises:
   determining at least one reference cell from the target cell set, in a case that the first DCI supports triggering Type-3 HARQ codebook transmission and an enhanced Type-3 codebook indicator is not included in the first DCI.

3. The method for determining one or more enhanced Type-3 HARQ codebook indices according to claim 1, wherein the determining at least one reference cell from the target cell set comprises:

   determining one or more scheduled cells from the target cell set according to one or more co-scheduled indicators in the first DCI;
   determining at least one predetermined cell in the one or more scheduled cells as the reference cell; or, determining at least one predetermined cell in the target cell set as the reference cell.

4. The method for determining one or more enhanced Type-3 HARQ codebook indices according to claim 3, wherein the predetermined cell is one of:

   a cell with a predetermined cell index value; or,
   a cell corresponding to the one or more target information indicators of a preset position in the first DCI; or,
   a cell having no Physical Downlink Shared Channel (PDSCH) transmission and with a predetermined cell index value; or,
   a cell having no PDSCH transmission and corresponding to the one or more target information indicators of the preset position in the first DCI.

5. The method for determining one or more enhanced Type-3 HARQ codebook indices according to claim 4, wherein the cell with the predetermined cell index value comprises:

> a cell with the largest cell index value; or,
> a cell with the smallest cell index value.

6. The method for determining one or more enhanced Type-3 HARQ codebook indices according to claim 4, wherein the cell corresponding to the one or more target information indicators of the preset position in the first DCI comprises:

> a cell corresponding to a first target information indicator in the first DCI; or,
> a cell corresponding to a last target information indicator in the first DCI.

7. The method for determining one or more enhanced Type-3 HARQ codebook indices according to claim 1 or 4, wherein the one or more target information indicators comprise one or more Frequency Domain Resource Allocation (FDRA) indicators and one or more Modulation and Coding Scheme (MCS) indicators;
wherein the determining one or more enhanced Type-3 HARQ codebook indices according to one or more target information indicators of the reference cell in the first DCI comprises:

> determining whether the reference cell has PDSCH transmission according to the one or more FDRA indicators of the reference cell;
> determining the one or more enhanced Type-3 HARQ codebook indices according to the one or more MCS indicators of the reference cell in the case of determining that the reference cell has no PDSCH transmission; and/or
> determining the one or more enhanced Type-3 HARQ codebook indices as default values, in the case of determining that the reference cell has PDSCH transmission.

8. The method for determining one or more enhanced Type-3 HARQ codebook indices according to claim 1, further comprising:

> receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator;
> determining, based on the configuration information, whether the first DCI supports triggering Type-3 HARQ codebook transmission, and whether the first DCI includes an enhanced Type-3 codebook indicator.

9. The method for determining one or more enhanced Type-3 HARQ codebook indices according to claim 8, wherein the receiving the configuration information sent by the base station comprises:

> receiving the configuration information carried by the base station through one or more one-shot feedback indication fields, wherein the configuration information is used for indicating whether the first DCI includes Type-3 HARQ response codebook transmission indicator(s);
> receiving the configuration information carried by the base station through one or more enhanced Type-3 indication fields, wherein the configuration information is used for indicating whether the first DCI includes enhanced Type-3 codebook indices indicator(s).

10. The method for determining one or more enhanced Type-3 HARQ codebook indices according to claim 9, wherein a number of bits occupied by the enhanced Type-3 codebook indices indicator(s) is where, $n_{CB}$ is a number of enhanced Type-3 codebook indices configured for the base station.

11. The method for determining one or more enhanced Type-3 HARQ codebook indices according to claim 1, wherein the one or more target information indicators of the reference cell comprises one or more MCS indicators;
wherein the determining one or more enhanced Type-3 HARQ codebook indices according to one or more target information indicators of the reference cell in the first DCI comprises:
determining one or more enhanced Type-3 HARQ codebook indices according to the one or more MCS indicators of a plurality of reference cells, wherein each of the plurality of reference cells corresponds to one of the one or more MCS indicators.

12. A method for determining enhanced Type-3 Hybrid Automatic Repeat request (HARQ) codebook indices, which is performed by a base station, the method comprising:

sending a first Downlink Control Information (DCI) to a terminal, the first DCI being used for scheduling at least one downlink cell in a target cell set;
wherein one or more target information indicators of the reference cell in the first DCI is used to indicate one or more enhanced Type-3 HARQ codebook indices, and the reference cell is at least one cell in the target cell set.

13. The method for determining one or more enhanced Type-3 HARQ codebook indices according to claim 12, wherein the reference cell is:

at least one predetermined cell in one or more scheduled cells, wherein the one or more scheduled cells are indicated through one or more co-scheduled indicators in the first DCI; or,
at least one predetermined cell in the target cell set.

14. The method for determining one or more enhanced Type-3 HARQ codebook indices according to claim 13, wherein the predetermined cell is one of:

a cell with a predetermined cell index value; or,
a cell corresponding to the one or more target information indicators of a preset position in the first DCI; or,
a cell having no Physical Downlink Shared Channel (PDSCH) transmission and with a predetermined cell index value; or,
a cell having no PDSCH transmission and corresponding to the one or more target information indicators of the preset position in the first DCI.

15. The method for determining one or more enhanced Type-3 HARQ codebook indices according to claim 14, wherein the cell with the predetermined cell index value comprises:

a cell with the largest cell index value; or,
a cell with the smallest cell index value.

16. The method for determining one or more enhanced Type-3 HARQ codebook indices according to claim 14, wherein the cell corresponding to the one or more target information indicators of the preset position in the first DCI comprises:

a cell corresponding to a first target information indicator in the first DCI; or,
a cell corresponding to a last target information indicator in the first DCI.

17. The method for determining one or more enhanced Type-3 HARQ codebook indices according to claim 13, wherein in the case where the first DCI does not include the one or more co-scheduled indicators, the method further comprises one of:

indicating the cells in the target cell set as having no PDSCH transmission, and wherein the one or more target information indicators of the cells are used for indicating one or more same enhanced Type-3 HARQ codebook indices; or,
indicating the cells in the target cell set as having PDSCH transmission.

18. The method for determining one or more enhanced Type-3 HARQ codebook indices according to claim 13, wherein in the case where the first DCI does include the one or more co-scheduled indicators, the method further comprises one of:

indicating a number of the one or more scheduled cells being limited to 1 through the one or more co-scheduled indicators;
indicating all of the one or more scheduled cells as having no PDSCH transmission, and wherein the one or more target information indicators of the cells are all used for indicating one or more same enhanced Type-3 HARQ codebook indices; or,
indicating all of the one or more scheduled cells as having PDSCH transmission.

19. The method for determining one or more enhanced Type-3 HARQ codebook indices according to claim 12 or 14, wherein the one or more target information indicators comprise one or more Frequency Domain Resource Allocation (FDRA) indicators and one or more Modulation and Coding Scheme (MCS) indicators.

20. The method for determining one or more enhanced Type-3 HARQ codebook indices according to claim 12, further comprising:
sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

21. The method for determining one or more enhanced Type-3 HARQ codebook indices according to claim 20, wherein the sending configuration information to the terminal comprises:

sending configuration information to the terminal through one or more one-shot feedback indication fields, wherein the configuration information is used for indicating whether the first DCI includes Type-3 HARQ response codebook transmission indicator(s);
sending configuration information to the terminal through one or more enhanced Type-3 indication fields, wherein the configuration information is used for indicating whether the first DCI includes enhanced Type-3 codebook indices indicator(s).

22. The method for determining one or more enhanced Type-3 HARQ codebook indices according to claim 20, wherein a number of bits occupied by the enhanced Type-3 codebook indices indicator(s) is where, $n_{CB}$ is a number of enhanced Type-3 codebook indices configured for the base station.

23. A terminal comprising a transceiver, a memory, a processor and a computer program stored in the memory and operable on the processor, wherein the processor is configured to read the computer program stored in the memory and perform the following processes:

receiving a first Downlink Control Information (DCI) sent by a base station, the first DCI being used for scheduling at least one downlink cell in a target cell set;
determining at least one reference cell from the target cell set; and
determining one or more enhanced Type-3 HARQ codebook indices according to one or more target information indicators of the reference cell in the first DCI.

24. The terminal according to claim 23, wherein the processor is further configured to read the computer program stored in the memory, perform the following processes:
determining at least one reference cell from the target cell set, in a case that the first DCI supports triggering Type-3 Hybrid Automatic Repeat reQuest (HARQ) codebook transmission and an enhanced Type-3 codebook indicator is not included in the first DCI.

25. The terminal according to claim 23, wherein the processor is further configured to read the computer program stored in the memory, perform the following processes:

determining one or more scheduled cells from the target cell set according to one or more co-scheduled indicators in the first DCI;
determining at least one predetermined cell in the one or more scheduled cells as the reference cell; or,
determining at least one predetermined cell in the target cell set as the reference cell.

26. The terminal according to claim 25, wherein the predetermined cell is one of:

a cell with a predetermined cell index value; or,
a cell corresponding to the one or more target information indicators of a preset position in the first DCI; or,
a cell having no Physical Downlink Shared Channel (PDSCH) transmission and with a predetermined cell index value; or,
a cell having no PDSCH transmission and corresponding to the one or more target information indicators of the preset position in the first DCI.

27. The terminal according to claim 26, wherein the cell with the predetermined cell index value comprises:

a cell with the largest cell index value; or,
a cell with the smallest cell index value.

28. The terminal according to claim 26, wherein the cell corresponding to the one or more target information indicators of the preset position in the first DCI comprises:

a cell corresponding to a first target information indicator in the first DCI; or,
a cell corresponding to a last target information indicator in the first DCI.

29. The terminal according to claim 23 or 26, wherein the one or more target information indicators comprise one or more Frequency Domain Resource Allocation (FDRA) indicators and one or more Modulation and Coding Scheme (MCS) indicators;
wherein the processor is further configured to read the computer program stored in the memory, perform the following processes:

determining whether the reference cell has PDSCH transmission according to the one or more FDRA indicators of the reference cell;
determining the one or more enhanced Type-3 HARQ codebook indices according to the one or more MCS indicators of the reference cell in the case of determining that the reference cell has no PDSCH transmission; and/or
determining the one or more enhanced Type-3 HARQ codebook indices as default values, in the case of determining that the reference cell has PDSCH transmission.

30. The terminal according to claim 23, wherein the processor is further configured to read the computer program stored in the memory, perform the following processes:

receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator;
determining, based on the configuration information, whether the first DCI supports triggering Type-3 HARQ codebook transmission, and whether the first DCI includes an enhanced Type-3 codebook indicator.

31. The terminal according to claim 30, wherein the processor is further configured to read the computer program stored in the memory, perform the following processes:

receiving the configuration information carried by the base station through one or more one-shot feedback indication fields, wherein the configuration information is used for indicating whether the first DCI includes Type-3 HARQ response codebook transmission indicator(s);
receiving the configuration information carried by the base station through one or more enhanced Type-3 indication fields, wherein the configuration information is used for indicating whether the first DCI includes enhanced Type-3 codebook indices indicator(s).

32. The terminal according to claim 31, wherein a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

33. The terminal according to claim 23, wherein the one or more target information indicators of the reference cell comprises one or more MCS indicators;
wherein the processor is further configured to read the computer program stored in the memory, perform the following processes:
determining one or more enhanced Type-3 HARQ codebook indices according to the one or more MCS indicators of a plurality of reference cells, wherein each of the plurality of reference cells corresponds to one of the one or more MCS indicators.

34. A base station comprising a transceiver, a memory, a processor and a computer program stored in the memory and operable on the processor, wherein the processor is configured to read the computer program stored in the memory and perform the following processes:

> sending a first Downlink Control Information (DCI) to a terminal, the first DCI being used for scheduling at least one downlink cell in a target cell set;
> wherein one or more target information indicators of the reference cell in the first DCI is used to indicate one or more enhanced Type-3 HARQ codebook indices, and the reference cell is at least one cell in the target cell set.

35. The base station according to claim 34, wherein the reference cell is:

> at least one predetermined cell in one or more scheduled cells, wherein the one or more scheduled cells are indicated through one or more co-scheduled indicators in the first DCI; or,
> at least one predetermined cell in the target cell set.

36. The base station according to claim 35, wherein in the case where the first DCI does not include the one or more co-scheduled indicators, the processor is further configured to read the computer program stored in the memory and perform the following processes:

> indicating the cells in the target cell set as having no PDSCH transmission, and wherein the one or more target information indicators of the cells are used for indicating one or more same enhanced Type-3 HARQ codebook indices; or,
> indicating the cells in the target cell set as having PDSCH transmission.

37. The base station according to claim 35, wherein in the case where the first DCI does include the one or more co-scheduled indicators, the processor is further configured to read the computer program stored in the memory and perform the following processes:

> indicating a number of the one or more scheduled cells being limited to 1 through the one or more co-scheduled indicators;
> indicating all of the one or more scheduled cells as having no PDSCH transmission, and wherein the one or more target information indicators of the cells are all used for indicating one or more same enhanced Type-3 HARQ codebook indices; or,
> indicating all of the one or more scheduled cells as having PDSCH transmission.

38. The base station according to claim 34, wherein the processor is further configured to read the computer programs stored in the memory, perform the following processes:
sending configuration information to the terminal, wherein each cell set corresponds to one piece of the configuration information, the configuration information is used for indicating whether the first DCI supports triggering Type-3 HARQ codebook transmission, and whether the first DCI includes an enhanced Type-3 codebook indicator.

39. The base station according to claim 38, wherein the processor is further configured to read the computer program stored in the memory, perform the following processes:

> sending configuration information to the terminal through one or more one-shot feedback indication fields, wherein the configuration information is used for indicating whether the first DCI includes Type-3 HARQ response codebook transmission indicator(s);
> sending configuration information to the terminal through one or more enhanced Type-3 indication fields, wherein the configuration information is used for indicating whether the first DCI includes enhanced Type-3 codebook indices indicator(s).

40. An apparatus for determining enhanced Type-3 Hybrid Automatic Repeat request (HARQ) codebook indices, which is arranged in a terminal, the apparatus comprising:

> a first receiving module for receiving a first Downlink Control Information (DCI) sent by a base station, the first DCI being used for scheduling at least one downlink cell in a target cell set;
> a first determining module for determining at least one reference cell from the target cell set; and
> a second determining module for determining one or more enhanced Type-3 HARQ codebook indices according to one or more target information indicators of the reference cell in the first DCI.

41. The apparatus for determining one or more enhanced Type-3 HARQ codebook indices according to claim 40, wherein the first determining module comprises:
a first determination submodule for determining at least one reference cell from the target cell set, in a case that the first DCI supports triggering Type-3 HARQ codebook transmission and an enhanced Type-3 codebook indicator is not included in the first DCI.

42. The apparatus for determining one or more enhanced Type-3 HARQ codebook indices according to claim 40, wherein the first determination module comprises:

a second determination sub-module for determining one or more scheduled cells from the target cell set according to one or more co-scheduled indicators in the first DCI;
determining at least one predetermined cell in the one or more scheduled cells as the reference cell; or,
determining at least one predetermined cell in the target cell set as the reference cell.

43. The apparatus for determining one or more enhanced Type-3 HARQ codebook indices according to claim 42, wherein the predetermined cell is one of:

a cell with a predetermined cell index value; or,
a cell corresponding to the one or more target information indicators of a preset position in the first DCI; or,
a cell having no Physical Downlink Shared Channel (PDSCH) transmission and with a predetermined cell index value; or,
a cell having no PDSCH transmission and corresponding to the one or more target information indicators of the preset position in the first DCI.

44. The apparatus for determining one or more enhanced Type-3 HARQ codebook indices according to claim 43, wherein the cell with the predetermined cell index value comprises:

a cell with the largest cell index value; or,
a cell with the smallest cell index value.

45. The apparatus for determining one or more enhanced Type-3 HARQ codebook indices according to claim 43, the cell corresponding to the one or more target information indicators of the preset position in the first DCI comprises:

a cell corresponding to a first target information indicator in the first DCI; or,
a cell corresponding to a last target information indicator in the first DCI.

46. The apparatus for determining one or more enhanced Type-3 HARQ codebook indices according to claim 40 or 43, wherein the one or more target information indicators comprise one or more Frequency Domain Resource Allocation (FDRA) indicators and one or more Modulation and Coding Scheme (MCS) indicators;
the second determination module comprises:

a third determination submodule for determining whether the reference cell has PDSCH transmission according to the one or more FDRA indicators of the reference cell;
a fourth determination submodule for determining the one or more enhanced Type-3 HARQ codebook indices according to the one or more MCS indicators of the reference cell in the case of determining that the reference cell has no PDSCH transmission; and/or
a fifth determination submodule for determining the one or more enhanced Type-3 HARQ codebook indices as default values, in the case of determining that the reference cell has PDSCH transmission.

47. The apparatus for determining one or more enhanced Type-3 HARQ codebook indices according to claim 40, further comprising:

a second receiving module for receiving configuration information sent by the base station, wherein each cell set corresponds to one piece of the configuration information, the configuration information is used for indicating whether the first DCI supports triggering Type-3 HARQ codebook transmission, and whether the first DCI includes an enhanced Type-3 codebook indicator;
a third determination module for determining, based on the configuration information, whether the first DCI supports triggering Type-3 HARQ codebook transmission, and whether the first DCI includes an enhanced Type-3 codebook indicator.

48. The apparatus for determining one or more enhanced Type-3 HARQ codebook indices according to claim 47, wherein the second receiving module comprises:

a first receiving submodule for receiving the configuration information carried by the base station through one or more one-shot feedback indication fields, wherein the configuration information is used for indicating whether the first DCI includes Type-3 HARQ response codebook transmission indicator(s);

a second receiving submodule for receiving the configuration information carried by the base station through one or more enhanced Type-3 indication fields, wherein the configuration information is used for indicating whether the first DCI includes enhanced Type-3 codebook indices indicator(s).

49. The apparatus for determining one or more enhanced Type-3 HARQ codebook indices according to claim 48, wherein a number of bits occupied by the enhanced Type-3 codebook indices indicator(s) is $\lceil \log_2(n_{CB}) \rceil$, where, $n_{CB}$ is a number of enhanced Type-3 codebook indices configured for the base station.

50. The apparatus for determining one or more enhanced Type-3 HARQ codebook indices according to claim 40, wherein the one or more target information indicators of the reference cell comprises one or more MCS indicators;

the second determination module comprises:

a sixth determination submodule for determining one or more enhanced Type-3 HARQ codebook indices according to the one or more MCS indicators of a plurality of reference cells, wherein each of the plurality of reference cells corresponds to one of the one or more MCS indicators.

51. An apparatus for determining one or more enhanced Type-3 HARQ codebook indices, which is arranged in a base station, the apparatus comprising:

a first sending module for sending a first Downlink Control Information (DCI) to a terminal, the first DCI being used for scheduling at least one downlink cell in a target cell set;

wherein one or more target information indicators of the reference cell in the first DCI is used to indicate one or more enhanced Type-3 HARQ codebook indices, and the reference cell is at least one cell in the target cell set.

52. A processor-readable storage medium storing therein a computer program, wherein the computer program is configured to cause a processor to execute the method for determining one or more enhanced Type-3 HARQ codebook indices according to any one of claims 1 to 11, or the computer program is configured to cause the processor to execute the method for determining one or more enhanced Type-3 HARQ codebook indices according to any one of claims 12 to 22.

receiving a first DCI sent by a base station, the first DCI being used for scheduling at least one downlink cell in a target cell set — 101

determining at least one reference cell from the target cell set — 102

determining enhanced Type-3 HARQ codebook indices according to one or more target information indicators of the reference cell in the first DCI — 103

**FIG. 1**

sending a first DCI to a terminal, the first DCI being used for scheduling at least one downlink cell in a target cell set; wherein one or more target information indicators of the reference cell in the first DCI is used to indicate enhanced Type-3 HARQ codebook indices, and the reference cell is at least one cell in the target cell set — 201

**FIG. 2**

300

First Receiving Module — 301

First Determining Module — 302

Second Determining Module — 303

**FIG. 3**

400

First Sending Module — 401

**FIG. 4**

510 Processor

500 Transceiver

Bus Interface

520 Memory

530 User Interface

**FIG. 5**

610 Processor

600 Transceiver

Bus Interface

620 Memory

**FIG. 6**

## INTERNATIONAL SEARCH REPORT

| International application No. |
| --- |
| **PCT/CN2024/091812** |

| A. | CLASSIFICATION OF SUBJECT MATTER |
| --- | --- |

H04L 1/1812(2023.01)i

According to International Patent Classification (IPC) or to both national classification and IPC

| B. | FIELDS SEARCHED |
| --- | --- |

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNTXT; CNKI; VEN; 3GPP: 增强, 类型3, 混合自动重传请求, 码本, 索引, 小区, 集合, 下行控制信息, 下行控制信号, enh +, Type-3, Type3, Type 3, HARQ, codebook, index, cell?, set, DCI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115701014 A (VIVO COMMUNICATION TECHNOLOGY CO., LTD.) 07 February 2023 (2023-02-07) description, paragraphs 0183, 0185, 0200, 0216, 0309, 0353, 0384-0391 and 0438-0476, and figures 4 and 8-12 | 1-52 |
| Y | CN 115913477 A (HUAWEI TECHNOLOGIES CO., LTD.) 04 April 2023 (2023-04-04) description, paragraphs 0146-0170, and figure 4 | 1-52 |
| A | CN 114287160 A (GUANGDONG OPPO MOBILE COMMUNICATIONS CO., LTD.) 05 April 2022 (2022-04-05) entire document | 1-52 |
| A | CN 115812285 A (BEIJING XIAOMI MOBILE SOFTWARE CO., LTD.) 17 March 2023 (2023-03-17) entire document | 1-52 |
| A | WO 2023024936 A1 (MEDIATEK SINGAPORE PTE. LTD. et al.) 02 March 2023 (2023-03-02) entire document | 1-52 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 July 2024** | **06 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091812**

| Patent document cited in search report | | | Publication date (day/month/year) | Patent family member(s) | | | Publication date (day/month/year) |
|---|---|---|---|---|---|---|---|
| CN | 115701014 | A | 07 February 2023 | None | | | |
| CN | 115913477 | A | 04 April 2023 | None | | | |
| CN | 114287160 | A | 05 April 2022 | None | | | |
| CN | 115812285 | A | 17 March 2023 | WO | 2023283826 | A1 | 19 January 2023 |
| WO | 2023024936 | A1 | 02 March 2023 | None | | | |

Form PCT/ISA/210 (patent family annex) (July 2022)

**REFERENCES CITED IN THE DESCRIPTION**

**Patent documents cited in the description**

- CN 202310532998